# EUROPEAN PATENT APPLICATION

(11) **EP 4 675 518 A1**
(43) Date of publication of application: **07.01.2026**
(21) Application number: 25186689.3
(22) Date of filing: 01.07.2025
(51) Int. Cl.: G06N 20/00, G06N 3/045

(54) **MACHINE-LEARNED ASSISTANT SYSTEMS WITH PREDICTIVE ACTION SCHEDULING**

(30) Priority: 01.07.2024 US 202463666571 P
(71) Applicant: GOOGLE LLC, Mountain View CA 94043 (US)
(72) Inventor: PEDERSEN, Zebedee, Mountain View, California 94043 (US); COBLEY, Bennet, Mountain View, California 94043 (US); DE JORGE LADRERO, Luis, Mountain View, California 94043 (US); KIRKLAND, Phoebe, Mountain View, California 94043 (US)
(74) Representative: Marks & Clerk GST

(57) **Abstract**

An example method includes generating, using a machine-learned assistant system and based on a first input, an action object comprising data describing an assistant action to be performed by the machine-learned assistant system. The example method includes generating, using the machine-learned assistant system and based on a second input, a time for executing the assistant action, wherein the second input is based on at least a portion of a cache of available context data. The example method includes queuing the action object for execution. The example method includes executing the assistant action associated with the action object using the machine-learned assistant system.

## Description

### PRIORITY

This application claims priority to United States Provisional Patent Application Serial No. 63/666,571 (filed July 1, 2024), which is hereby incorporated by reference.

### FIELD

The present disclosure relates generally to machine learning processes and machine-learned devices and systems. More particularly, the present disclosure relates to machine-learned assistant systems with predictive action scheduling.

### BACKGROUND

A computer can receive input(s). The computer can execute instructions to process the input(s) to generate output(s) using a parameterized model. The computer can obtain feedback on its performance in generating the outputs with the model. The computer can generate feedback by evaluating its performance. The computer can receive feedback from an external source. The computer can update parameters of the model based on the feedback to improve its performance. In this manner, the computer can iteratively "learn" to generate the desired outputs. The resulting model is often referred to as a machine-learned model.

### SUMMARY

Aspects and advantages of embodiments of the present disclosure will be set forth in part in the following description, or can be learned from the description, or can be learned through practice of the embodiments.

In an aspect, the present disclosure provides a first example computer-implemented method. In some implementations, the first example method includes generating, using a machine-learned assistant system and based on a first input, an action object comprising data describing an assistant action to be performed by the machine-learned assistant system. In some implementations, the first example method includes generating, using the machine-learned assistant system and based on a second input, a time for executing the assistant action, wherein the second input is based on at least a portion of a cache of available context data. **In** some implementations, the first example method includes queuing the action object for execution. **In** some implementations, the first example method includes executing the assistant action associated with the action object using the machine-learned assistant system.

**In** an aspect, the present disclosure provides a second example method. **In** some implementations, the second example method includes receiving unstructured input data. **In** some implementations, the second example method includes inputting the unstructured input data to a machine-learned preprocessing model to generate one or more input chunks. **In** some implementations, the second example method includes for at least one respective input chunk of the one or more input chunks constructing a respective context object for the respective input chunk, wherein the respective context object includes a plurality of attributes. In some implementations, the second example method includes for at least one respective input chunk of the one or more input chunks In some implementations of the second example method, the plurality of attributes comprise content from the respective input chunk. In some implementations of the second example method, the plurality of attributes comprise one or more attributes characterizing features of the respective input chunk. In some implementations, the second example method includes storing the context objects in a context object datastore. In some implementations, the second example method includes querying the context object datastore to obtain a context object, wherein the query operates over at least one of the attributes of the plurality of attributes of the context object. In some implementations, the second example method includes inputting, by a machine-learned assistant system and to a machine-learned model, context data obtained from the context object. In some implementations, the second example method includes receiving, by the machine-learned assistant system and from the machine-learned model, an inference generated based on the context data. In some implementations, the second example method includes executing, by the machine-learned assistant system, an assistant action based on the inference.

In an aspect, the present disclosure provides a third example method. In some implementations, the third example method includes receiving unstructured input data. In some implementations, the third example method includes inputting the unstructured input data to a machine-learned preprocessing model to generate one or more input chunks. In some implementations, the third example method includes for at least one respective input chunk of the one or more input chunks constructing a respective action object for the respective input chunk, wherein the respective action object includes one or more attributes describing a respective action to be performed by a machine-learned assistant system. In some implementations, the third example method includes submitting the action object for execution. In some implementations, the third example method includes executing, by the machine-learned assistant system, an assistant action based on the inference.

Example aspects of the present disclosure provide one or more example non-transitory computer-readable media storing instructions that are executable by one or more processors to cause a computing system to perform example operations. In some implementations, the example operations can include any implementation of the first example method, second example method, or third example method, or any integration or combination thereof.

Example aspects of the present disclosure provide an example computing system that includes one or more processors and one or more example non-transitory computer-readable media storing instructions that are executable by one or more processors to cause a computing system to perform example operations. In some implementations, the example operations can include any implementation of the first example method, second example method, or third example method, or any integration or combination thereof.

Example aspects of the present disclosure provide an example computer program product comprising instructions that are executable by one or more processors to cause a computing system to perform example operations. In some implementations, the example operations can include any implementation of the first example method, second example method, or third example method, or any integration or combination thereof.

Other example aspects of the present disclosure are directed to other systems, methods, apparatuses, tangible non-transitory computer-readable media, and devices for performing functions described herein. These and other features, aspects, and advantages of various implementations will become better understood with reference to the following description and appended claims. The accompanying drawings, which are incorporated in and constitute a part of this specification, illustrate implementations of the present disclosure and, together with the description, help explain the related principles.

### BRIEF DESCRIPTION OF THE DRAWINGS

Figure 1 is a block diagram that illustrates an example architecture of a machine-learned assistant system according to example implementations of aspects of the present disclosure;
Figure 2 is a block diagram that illustrates an example architecture of a machine-learned assistant system according to example implementations of aspects of the present disclosure;
Figure 3 is a block diagram that illustrates an example architecture of a machine-learned assistant system according to example implementations of aspects of the present disclosure;
Figure 4 is a flow chart diagram illustrating an example method for training a machine-learned model according to example implementations of aspects of the present disclosure;
Figure 5 is a block diagram of an example processing flow for using machine-learned model(s) to process input(s) to generate output(s) according to example implementations of aspects of the present disclosure;
Figure 6 is a block diagram of an example sequence processing model according to example implementations of aspects of the present disclosure;
Figure 7 is a block diagram of an example technique for populating an example input sequence for processing by a sequence processing model according to example implementations of aspects of the present disclosure;
Figure 8 is a block diagram of an example model development platform according to example implementations of aspects of the present disclosure;
Figure 9 is a block diagram of an example training workflow for training a machine-learned model according to example implementations of aspects of the present disclosure;
Figure 10 is a block diagram of an inference system for operating one or more machine-learned model(s) to perform inference according to example implementations of aspects of the present disclosure;
Figure 11 is a block diagram of an example networked computing system according to example implementations of aspects of the present disclosure;
Figure 12 is a block diagram of an example computing device according to example implementations of aspects of the present disclosure;
Figure 13 is a block diagram of an example computing device according to example implementations of aspects of the present disclosure;
Figure 14 is a flow chart diagram illustrating an example method for using a machine-learned assistant system according to example implementations of aspects of the present disclosure;
Figure 15 is a flow chart diagram illustrating an example method for using a machine-learned assistant system according to example implementations of aspects of the present disclosure; and
Figure 16 is a flow chart diagram illustrating an example method for using a machine-learned assistant system according to example implementations of aspects of the present disclosure.

### DETAILED DESCRIPTION

Generally, the present disclosure is directed to assistant systems that can perform actions on behalf of users or systems. An example assistant system according to the present disclosure can receive a request to perform an action and predictively schedule performance of the action. For example, insufficient context data may be available at the present time in order to satisfactorily perform the action, or other actions or events may take precedence over the requested action. Based on currently available information, the example assistant system can predict a time for executing the action. At the scheduled time, the example assistant system can perform the action. The action can be a predictive action. For instance, the action can include using a machine-learned model to perform inference over a set of input data. This input data may have been unavailable at the time of initial request. In this manner, for instance, machine-learned assistant systems according to the present disclosure can intelligently queue predictive tasks and execute when prerequisite information is available.

Prior approaches to performing inference in machine-learned assistant systems often attempt to perform requested tasks based on available information. This eager execution scheme can lead to inaccuracies and inefficiencies in task execution. For instance, if a system uses only the information available at the initial request time to perform inference without considering updates or additional inputs that may become available later, it can result in errors (e.g., due to incomplete information) or lead to multiple re-runs of the inference process (e.g., each time new information comes available). For instance, naively re-running inference to provide new predictions each time updated context becomes available can incur significant computational cost. That computational effort can be wasted if most of the attempts fail. **In** general, the quality of predictions from machine-learned models is often linked to the quality of the provided inputs. With incomplete information, a machine-learned model may be unable to obtain any prediction or may generate a prediction with high error. For machine-learned assistant systems, prediction errors can lead to failed actions (e.g., attempts to engage other software applications or computing devices end in error), action overrides (e.g., a user stops execution of an action due to an error in its predicate predictions), or other failures.

Further, the eager execution scheme of some prior approaches can limit the utility of assistant systems to perform real-world tasks in a helpful manner. For instance, existing techniques often require synchronous interactions: an assistant system may be able to help perform a task (e.g., cataloguing images, performing a file transfer, etc.) but only if the prerequisites for the task are already available and ready for access. This limitation effectively hinders the level of automation of the assistant system and places significant reliance on manually timing various inputs to initiate task performance. While some tasks may be scheduled, generally such schedules are prescribed using static scheduling parameters (e.g., on a fixed cadence, after a designated amount of time, etc.).

Advantageously, example implementations of the present disclosure provide for machine-learned assistant systems that can expand capabilities for asynchronous automation. This expansion in capabilities can in turn provide more efficient human machine-interfaces that reduce a reliance on synchronous instructions manually received and input from users.

For example, an example machine-learned assistant system can use one or more machine-learned models to evaluate a condition of available input data before performing inference for a requested task. For example, a machine-learned model can execute a scheduling query to determine a time for executing an action to perform the task. The model can predict a time at which sufficient context data is expected to be available. The machine-learned assistant system can queue the execution of the action for a later time.

For instance, a general instruction to "lower my HVAC temperature while I'm on vacation" may generally suggest a time for execution (on vacation), but certain parameters used to implement the request (e.g., temperature parameters for controlling the HVAC system) may be best inferred at execution time. Similarly, the system can receive an instruction to purchase camera equipment for an upcoming trip and can defer an automated purchase action until further contextual information is available from the user's calendar (e.g. using the location of the trip to inform whether to purchase underwater equipment for a diving holiday rather than long-range lenses for a safari).

At such later time, the machine-learned assistant system can retrieve the action from the queue and execute inference over inputs that include newly available information at the later time. In this manner, for instance, the machine-learned assistant system can automate the performance of various actions and tasks while avoiding predictions that are based on low-quality or incomplete inputs. In turn, example implementations of the present disclosure can decrease a number of failed actions, thereby increasing a capacity of the machine-learned assistant system to automate tasks (e.g., improving a human-machine interface for controlling a computing device) while also decreasing the wasted computational resources (e.g., reducing the energy and bandwidth consumed by predicting, storing, and attempting to execute actions in error).

A technical problem overcome by example implementations of the present disclosure is the inefficiency in human-machine interactions caused by dependency on synchronous user inputs or static scheduling parameters that do not account for the dynamic availability of context data.

In an example solution to this technical problem, an example implementation of the present disclosure processes a scheduling query using available context data to determine an optimal time for executing an assistant action. This approach allows a system to predict when sufficient context data will be available to perform the action effectively, addressing the inefficiency of relying on static scheduling parameters.

In an example solution to this technical problem, an example implementation of the present disclosure is capable of deferring the execution of an action based on the dynamic assessment of the context data availability. In this manner, actions may not be executed until the system determines that all necessary data is available, minimizing errors and inefficiencies that occur when actions are performed with incomplete data.

In an example solution to this technical problem, an example implementation of the present disclosure can continually update the scheduling of tasks based on newly available or updated context data. Accordingly, tasks can be rescheduled in the background without constant dependence on manual inputs.

In an example solution to this technical problem, an example implementation of the present disclosure can automatically generate requests for the missing information. For example, instead of indefinitely awaiting a static scheduling parameter (e.g., a trigger condition), a system can recognize a need to seek additional inputs to advance execution of a desired task.

In general, the use of machine-learned models to analyze available context data and predict the optimal timing for actions introduces an improved level of automation that reduces reliance on manual inputs and static rules.

In another aspect, the present disclosure provides for structured context management. In an example, structured context management can include categorization and storage of objects derived from unstructured input data. A machine-learned assistant system can obtain input chunks processed using a machine-learned preprocessing model. Each input chunk can be mapped to a context object or an action object. A context object can store input data and its attributes to facilitate recall (e.g., for maintaining a list of reminder tasks). A context object can store input data and its attributes for conditioning future machine-learned model inferences (e.g., by injecting context data from the context object into an input of the model). An action object can store input data and its attributes describing a task for the assistant system to perform. For instance, an input can be ingested to identify actionable tasks for the assistant system to perform on behalf of the user (e.g., uploading images, sending a communication message, etc.). The action objects can define commands to execute, application programming interface (API) calls to invoke, etc.

Each object can encapsulate a plurality of attributes that not only contain the content from the respective input chunk but also attributes characterizing features of the input. These attributes may include, for instance, temporal attributes (e.g., indicating timing or urgency), a classification of the input (e.g., as an action to execute or as context for storage), related objects (e.g., related chunks of context, related actions to perform based on the input), etc.

Each object can further include input source data corresponding to the original input from which the chunk was parsed. The input source data can provide context for the input chunk or any attributes derived therefrom. The input source data can improve traceability of inputs to objects.

In an example, an unstructured input string can contain the substring "Schedule a meeting tomorrow at 3 PM for 30 minutes." This substring can be extracted and parsed into an action object. An action type attribute can be identified as "meeting." An action duration attribute can be specified as "30 minutes." An action urgency attribute can be inferred from the scheduling term "tomorrow" as high.

The chunking process can use natural language processing techniques that can parse and interpret freeform text. Techniques such as tokenization (e.g., paragraph, sentence, word, subword, etc.), part-of-speech tagging, and entity recognition can be used. For example, "tomorrow at 3 PM" can be recognized as a temporal entity associated with the timing of an action.

Machine-learned attribute prediction models can be used to infer attributes for the action or context object. These attributes can include action urgency. The model can be trained using a dataset. The dataset can include inputs or actions labeled with urgency levels. The model can learn patterns and indicators of urgency from text. Phrases such as "as soon as possible" or "by the end of the day" can be classified with high urgency. Similarly, other models can be fine-tuned to predict other attributes. In this manner, for instance, on intake, multiple preprocessing models can work to extract implicit or explicit signals from the input and encode those signals in stored attributes.

Attributes can capture and associate relevant situational or environmental information with the action object. This can include linking emails, documents, or prior actions that are related to the new action object. For instance, if the action pertains to a follow-up on a prior meeting, the action object can link to the notes or outcomes from that meeting.

In this manner, for instance, an object can integrate new inputs with existing context. Existing context can be obtained from one or more context objects already stored in the system or from other sources of context (e.g., other applications, such as messaging or calendar applications). Existing context can be added to a context object and stored in a context object datastore for future retrieval.

Once created, an action object can be queued for execution. The action object can be executed from the queue on a schedule. The action object in the queue can be exposed via a user interface. For instance, an application can provide a user interface via which users can modify attributes such as duration, type, or urgency. For instance, an application can provide a confirmation interface upon initial ingestion (e.g., "I understand that you want me to perform the following task: ... ") or can provide a review interface for upcoming actions (e.g., "Here is a list of the actions you have asked me to perform this week: ... ") and receive inputs that modify one or more attributes of the action, or delete or cancel the action.

A technical problem overcome by example implementations of the present disclosure is the efficient indexing and storing of numerous contextual signals and commands received over time for processing by a machine-learned assistant system. Machine-learned assistant systems can aim to provide an integrated interface for inputting various commands, notes, comments, and reminders as users or other systems perform other tasks so that the assistant system can provide customized active assistance. These inputs, if not catalogued effectively, can inhibit the performance of the assistant system as an interface for a computing device. For instance, if an assistant system fails to return outputs that are responsive to inputs in an accurate and reliable fashion, then the assistant system may have decreased utility as an automated mechanism for interacting with and controlling a computing device. For example, naively retaining all prior inputs in their original format as context for each subsequent input can lead to an explosion of input size. A structured storage mechanism provides for efficient representation and recall of contextual data.

In an example solution to this technical problem, an example implementation of the present disclosure can store input data in association with its attributes. This contextualizing of input data can help persist not only the bare input itself but also its context, timing, grouping with other inputs, etc. These attributes can be encapsulated with the input data in an object. The object can be stored for later retrieval and ingestion by the machine-learned assistant system. As the machine-learned assistant system processes the object, its attributes can be exposed to various downstream processes that can use the attribute data to adapt a processing of the input data based on the rich contextualization. In this manner, for instance, example implementations of the present disclosure can receive various different contextual signals and commands over time and more effectively adapt the functionality of a machine-learned assistant system using the signals, thereby providing a more effective and efficient interaction interface for automating processes performed on computing devices.

Various aspects of the technology described herein can provide other technical effects and benefits. For instance, an example technical effect of example implementations of the present disclosure is the reduction in the use of computing resources during runtime by preprocessing and storing high-quality context objects. Unstructured input data received by the system can be initially processed through a machine-learned preprocessing model, which can segment this data into discrete input chunks. Each chunk is then associated with a context object that encapsulates various attributes relevant to the input, such as content specifics and characterizing features. The resulting object can provide much higher quality context signals by condensing key features into explicit attributes. At runtime, then, a machine-learned assistant system can quickly retrieve context objects for a particular inference and access the high-quality context. Pre-processed, structured storage of context objects may significantly reduce the computational load at runtime, as the system may not need to ingest larger amounts of unstructured data. For instance, directly inputting large amounts of unstructured data into a machine-learned model for obtaining an inference for a particular task (e.g., action prediction or identification) can sometimes be less reliable or accurate than inputting clean, curated, and condensed data for the same query. Performing such data curation and cleaning at input time and caching for later use can facilitate lower latency responses at runtime.

An example technical effect of example implementations of the present disclosure is increased energy efficiency in performing operations using machine-learned models, thereby improving the functioning of computers implementing such models. For instance, example implementations can provide for more energy-efficient runtime execution or inference (e.g., by the use of pre-processed context and action objects, or by scheduling inference to occur at such time that sufficient context is available to avoid re-runs). In some scenarios, increased energy efficiency can provide for less energy to be used to perform a given task (e.g., less energy expended to maintain the model in memory, less energy expended to perform calculations within the model, etc.). In some scenarios, increased energy efficiency can provide for more task(s) to be completed for a given energy budget (e.g., a larger quantity of tasks, more complex tasks, the same task but with more accuracy or precision, etc.).

In this manner, for instance, the improved energy efficiency of example implementations of the present disclosure can reduce an amount of pollution or other waste associated with implementing machine-learned models and systems, thereby advancing the field of machine-learning and artificial intelligence as a whole. The amount of pollution can be reduced in toto (e.g., an absolute magnitude thereof) or on a normalized basis (e.g., energy per task, per model size, etc.). For example, an amount of CO2 released (e.g., by a power source) in association with training and execution of machine-learned models can be reduced by implementing more energy-efficient training or inference operations. An amount of heat pollution in an environment (e.g., by the processors/storage locations) can be reduced by implementing more energy-efficient training or inference operations.

Example implementations are discussed in greater detail with respect to the Figures.

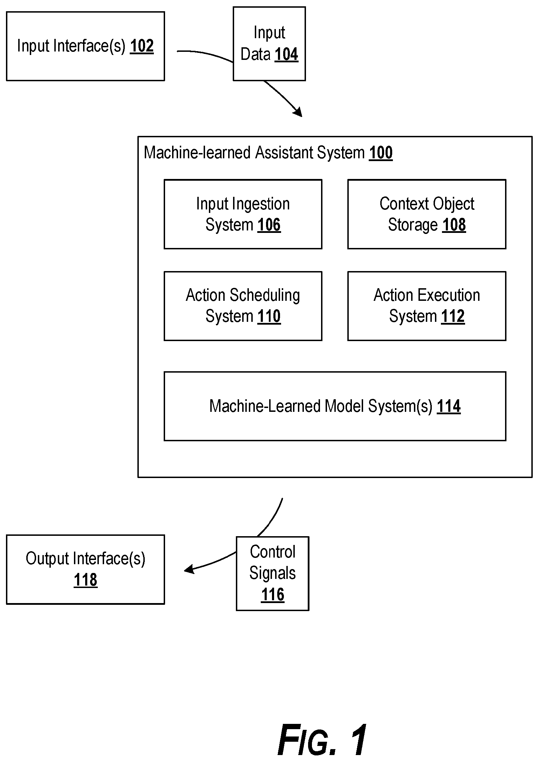

Figure 1 is a block diagram that illustrates an example architecture of a machine-learned assistant system 100 designed to manage and execute tasks based on received input data. Input interface(s) 102 can receive input data 104 from users or other systems. This input data 104 can be processed by input ingestion system 106. Input ingestion system 106 can parse and analyze the data to extract relevant information and transform it into a structured format.

Input ingestion system 106 can generate context objects and action objects. Context objects can be stored in context object storage 108. Action objects can be passed to action scheduling system 110 or action execution system 112.

Action scheduling system 110 can determine the timing for executing actions based on context data stored in context object storage 108. Action scheduling system 110 can use one or more machine-learned models to generate inferences that describe a timing of execution for an action. Action scheduling system 110 can use one or more heuristics to determine a timing of execution for an action (e.g., an instruction may specify a time).

Action scheduling system 110 can also schedule actions based on available resources on a computing device. For instance, action scheduling system 110 can access real-time and historical data concerning the current usage of CPU, memory, storage, and network bandwidth on the computing device. This data can be obtained either through direct monitoring by the system itself or via interfaces that provide system performance metrics. Based on this information, action scheduling system 110 can predict when to schedule specific actions. If the system detects that the processor or memory usage is or is expected to be high, potentially due to other intensive processes running on the device, it can opt to delay the execution of non-critical tasks to a later time when the system resources are more available.

Action execution system 112 can perform operations to execute the action. Action execution system 112 can generate inferences using machine-learned models and interact with various components of the machine-learned assistant system 100 and external systems to complete the task.

Any of the components of machine-learned assistant system 100 can interact with machine-learned model system(s) 114 to generate inferences for performing various tasks. Machine-learned model system(s) 114 can include one or multiple models. Machine-learned model system(s) 114 can include multiple different models trained or otherwise configured to perform specific tasks such as chunking an input, scheduling a task, predicting urgency, etc. For example, as discussed in more detail below with respect to model alignment toolkit 17 and prompt libraries 17-4, one or more inputs to a model can be constructed to induce a model to output responses that perform specific tasks such as chunking an input, scheduling a task, predicting urgency, etc.

Machine-learned assistant system 100 can generate control signals 116 that contain instructions for causing output interface(s) 118 to change state or otherwise act to perform operations in service of an assistant action executed by machine-learned assistant system 100.

Machine-learned assistant system 100 can be or include processing logic, firmware, and hardware configured to automated one or more interactions with a computing device or system. For instance, machine-learned assistant system 100 can be hosted on a local device or a cloud server to control operations of the host device or other networked devices. Machine-learned assistant system 100 can receive inputs and initiate automated actions or tasks based on the inputs.

For instance, machine-learned assistant system 100 can reduce a complexity of inputs to perform various tasks on a computing device or system. For example, machine-learned assistant system 100 can use machine-learned models to compute actions to perform based on inputs in view of accumulated context from prior inputs. In this manner, for instance, even minimal inputs can be effective to initiate execution of complex tasks.

Input interface(s) 102 can include various devices or systems that receive input signals or other data from users or other devices or systems. Examples of such devices or systems can range from microphones and cameras that capture voice and visual inputs, respectively, to keyboards and touchscreens that allow for textual and touch-based inputs. Additionally, embedded sensors can provide environmental data, such as temperature or motion, which can also be processed by input interface(s) 102.

Input interface(s) 102 can process a variety of inputs provided by users or automated systems. For instance, users can provide voice commands, typed messages, or selections made via touchscreen interfaces. For instance, a voice recognition system could enable users to provide input through spoken commands, which the system then converts into a digital format that the machine-learned assistant system can process. Automated systems, such as sensors or other software applications, can send status updates, alerts, or other data streams to the input interface(s) 102. Input interface(s) 102 can be implemented using an application programming interface (API) exposed over a network or within an execution environment.

Input data 104 can include various forms of information that users or automated systems provide for the machine-learned assistant system. This input data can be structured or unstructured and may come from diverse sources such as text entries, voice commands, digital records, or sensor outputs. For example, a user might type a request into a text interface, speak a command into a voice-activated device, attach or upload a file to an input interface, or a connected device might automatically send data based on certain triggers.

Input ingestion system 106 can process and analyze input data received from users or other systems. Input ingestion system 106 can parse the raw input data, which may be in structured or unstructured formats. Input ingestion system 106 can employ natural language processing techniques to interpret and transform this data into a structured format that can be further utilized within the system. Input ingestion system 106 can parse input data into chunks. Input ingestion system 106 can classify input data to assign attributes. Input ingestion system 106 can parse input data by tokenizing an input and processing the tokens using a machine-learned model (e.g., a natural language processing model). Examples of processing tokenized inputs are provided in more detail with respect to machine-learned sequence processing model(s) 4. Input ingestion system 106 can generate context objects and action objects based on the analyzed input. These objects encapsulate relevant data and attributes derived from the input.

Context object storage 108 can use various types of hardware and software components. Examples of devices or systems that can be used to implement context object storage 108 include traditional relational databases, NoSQL databases, in-memory data stores, and distributed file systems. Additionally, cloud storage solutions provided by network-hosted platforms can also be used. Machine-learned assistant system 100 can query context object storage 108 to retrieve context objects that match certain criteria, such as all context objects with a high urgency attribute or those related to a particular project or topic. These retrieved context objects are then used to inform and guide the decision-making processes of the system, such as scheduling tasks, generating responses, or executing actions based on the context data.

Action scheduling system 110 can include processing logic configured to determine the timing for executing actions using machine-learned assistant system 100. Action scheduling system 110 can use context data stored in context object storage 108 to assess when sufficient information is available to perform an action effectively, or when an action should be deferred due to the anticipated availability of more relevant data. For example, the scheduling system can process queries that evaluate the current context against predefined criteria or learned patterns to predict the best time for action execution. This prediction analyze the urgency, dependencies, and potential impact of the action, as well as the dynamic availability of necessary data.

Action scheduling system 110 can include processing logic to manage a queue of actions waiting for execution. Action scheduling system 110 can re-evaluate and update the execution times of queued actions as new context data becomes available or as circumstances change. The system can automatically adjust the schedule of actions in response to new inputs or changes in the system's environment.

Action scheduling system 110 can receive various inputs from other components of machine-learned assistant system 100. These inputs can include context objects from context object storage 108. The inputs can include action objects from input ingestion system 106. The inputs can include direct inputs from input ingestion system 106, such as real-time data that affects task scheduling decisions.

Action scheduling system 110 can provide a variety of outputs. An example output of action scheduling system 110 can include scheduled tasks that are ready for execution, which are sent to the action execution system. These outputs might also include notifications or alerts about scheduling changes or conflicts that need to be resolved manually or through further automated processing.

Action execution system 112 can initiate execution of tasks as determined by action scheduling system 110. Action execution system 112 can perform operations to initiate the actions that have been scheduled and queued. For instance, action execution system 112 can interact with external systems or software applications to carry out tasks such as sending data, generating inferences, processing images, etc. Action execution system 112 can use machine-learned models to generate inferences from the context data available at the time of execution, ensuring that the actions can be performed based on the most current and relevant information.

Action execution system 112 can handle errors or exceptions that may occur during the execution of actions. Action execution system 112 can include retry mechanisms or alternative pathways to ensure that tasks are completed successfully or to provide feedback when an action cannot be completed as planned. Additionally, this system can generate logs or reports detailing the outcomes of executed actions, which can be used for auditing, optimization, or troubleshooting purposes.

Action execution system 112 can use various types of hardware and software components. Examples of devices or systems that can be used to implement action execution system 112 include on-device machine-learned model libraries and services, cloud-hosted machine-learned model inference services, on-device parallel processing accelerators (e.g., processors configured to accelerate highly parallelizable computations).

Action execution system 112 can receive inputs from other components of machine-learned assistant system 100. These inputs can include action objects from action scheduling system 110. Action execution system 112 can process an action object to implement instructions for executing an action described thereby. For instance, action execution system 112 can execute an executable component of the object (e.g., a class method associated with a class object).

Example outputs from action execution system 112 can include control signals that instruct local systems to perform tasks (e.g., a system local to a device hosting machine-learned assistant system 100). Example outputs from action execution system 112 can include control signals 116 that instruct external systems 118 to perform tasks. Example outputs from action execution system 112 can include confirmations of completed actions, such as notifications sent to users or updates to external systems that a task has been performed. For instance, after executing a scheduled backup, the system might send a confirmation email to the user and update a database entry to reflect the completion of the task.

Machine-learned model systems 114 can facilitate interactions between components of machine-learned assistant system 100 and one or more machine-learned models. Machine-learned model systems 114 can directly execute one or more machine-learned models or can provide API access to other systems (on-device or on external devices) that execute one or more machine-learned models using inputs provided via the API.

Machine-learned model systems 114 can provide access to generalist models (e.g., that implement various functionality of machine-learned assistant system 100). For instance, machine-learned model systems 114 can provide access to foundational models that are configured to perform inference for a wide variety of tasks. Machine-learned model systems 114 can provide access to machine-learned sequence processing models, such as large language models or "LLMs" or small language models or "SLMs."

Machine-learned model systems 114 can provide access to a variety of specialized models (e.g., that implement various functionality of components of machine-learned assistant system 100). The models can be designed and trained (e.g., fine-tuned) to perform specific tasks.

Example tasks include parsing and analyzing input data, predicting the timing for action execution, and generating inferences necessary for action completion. Example tasks include identifying and categorizing text within an input to determine urgency or to recognize action entities. Example tasks include scheduling, such as by analyzing context data to predict optimal times for action execution based on factors such as priority and resource availability.

Machine-learned model systems 114 can include or invoke various types of hardware and software components specifically designed to execute machine learning algorithms and models. Examples of devices or systems that can be used to implement machine-learned model systems 114 include dedicated machine learning environments equipped with high-performance GPUs for accelerated computing. These environments can be hosted locally on an edge device or hosted on a server to offload computational tasks.

Control signals 116 can include instructions and data for coordinating and executing various operations using machine-learned assistant system 100. These signals can be generated by machine-learned assistant system 100 after processing input data and determining actions to be executed. For instance, control signals 116 may direct output interfaces to display specific information, initiate communication with external systems (e.g., via an API), or trigger internal processes such as data retrieval or updates.

Control signals 116 can include various types of electronic or digital commands to operate and manage the actions of devices within the machine-learned assistant system or external systems interacting with it. Examples of devices or systems that can be controlled by control signals 116 include microcontrollers, programmable logic controllers (PLCs), and computer systems equipped with software capable of receiving and processing these signals.

Output interface(s) 118 can include various mechanisms and devices that enable the machine-learned assistant system to communicate with users or other systems. These interfaces may consist of graphical user interfaces (GUIs), audio output devices, network connectivity devices, API libraries, and other components that can send data or render data relevant to the assistant actions executed by the system. For example, GUIs can display results of a task, notifications about upcoming tasks, or alerts regarding any required user inputs. Additionally, audio outputs can provide auditory feedback or alerts, which can be particularly useful in scenarios where visual interaction is impractical. An API library can pass control signals 116 to other processing logic or applications to perform an action responsive to control signals 116.

Output interface(s) 118 can include network interfaces that enable the machine-learned assistant system to send data or commands to other systems. For instance, the output interfaces can facilitate the execution of API calls to external services.

Output interface(s) 118 can include various devices or systems that enable the machine-learned assistant system to communicate and interact with users or other external systems. Examples of devices or systems that can be used to implement output interface(s) 118 include displays (such as LCD or OLED screens), speakers, printers, notification LEDs, haptic feedback devices, and network interfaces for sending data to other systems or devices. Additionally, output interface(s) 118 can include software components that generate user interface elements or connect software libraries via API definitions.

An example practical application of machine-learned assistant system 100 is a memory assistance application. In the example memory assistance application, a single interface modality, such as text or voice, can be employed to receive user inputs. These inputs can be processed by input interface(s) 102, which may be capable of capturing and converting natural language into a digital format that the system can understand. For instance, a user might say, "I am trying to build strength for my competition. Remind me to buy milk," and input interface(s) 102 can capture this input for further processing. Once captured, input data 104 can be forwarded to input ingestion system 106. Input ingestion system 106 can segment the input into discrete chunks, each of which may correspond to a specific task such as storing a long-term memory or recalling a list of previously stored memories. For example, "I am trying to build strength for my competition" might be segmented as context for longer-term context (e.g., context for conditioning future inferences), while "remind me to buy milk" might be segmented as context for a short-term reminder action. In an example, the user's long term goal for building strength can implicitly influence performance of other tasks, such as requests to suggest morning routines, requests to suggest recipes, etc. For instance, the long term context may not be explicitly recalled for serving to the user. For instance, the long term context can be added to a context portion of inputs to a machine-learned model executing inference for various tasks, such that the returned inference for those tasks is conditioned on the long term context.

These parsed chunks can then be processed to generate context objects or action objects that can be stored or queued for action, respectively. For instance, in the example memory assistance application, action objects related to storing memories can be handled differently based on whether they are categorized as short-term or long-term. This differentiation may be managed by one or more components of machine-learned assistant system 100, such as action scheduling system 110, which can determine the appropriate timing and storage methodology for each type of memory based on predefined rules or learned preferences. Based on the stored context, the example memory assistance application can predict that the user is likely to need a recall of certain memories and proactively provide that information.

Action execution system 112 can handle operations such as recalling a list of memories or answering questions about specific memories. The example memory assistance application can interact with external databases or other storage solutions to retrieve the necessary information and present it to the user through output interface(s) 118. This interface can render the retrieved information in a user-friendly format, such as displaying a list of memories on a screen or audibly reciting them through a speaker.

In an example practical application of the machine-learned assistant system 100, an example memory assistance application can use conditioning interactions to condition the behavior of an application based on user inputs that convey preferences or states. These conditioning interactions can be processed and stored differently from instruction interactions that pertain to the core functionalities of the application, such as task management and recall. For instance, input ingestion system 106 can receive and parse user inputs where a user might express a desire to "eat more healthily." This input can be transformed into a structured format and stored as conditioning context within context object storage 108. For instance, the chunk "eat more healthily" can be stored in an object with an attribute that designates the context as conditioning context.

Machine-learned assistant system 100 can then use stored conditioning context to condition the behavior of the memory assistance application during future interactions. For example, when a user queries "what shall I have for breakfast," the application, leveraging the conditioning context, may prioritize healthier food options. This demonstrates an adaptive behavior based on the user's previously expressed dietary goal by using the context to condition the inferences generated by machine-learned assistant system 100. Similarly, if a user indicates they are "super tired and very busy during the week," action scheduling system 110 can defer reminders for more time-consuming tasks to the weekend. This can leverage conditioning context from context object storage 108 to predict times for scheduling tasks. In contrast to traditional systems that might require explicit user input to schedule tasks, the machine-learned assistant system 100 can intelligently infer and automate task scheduling based on implicit user signals.

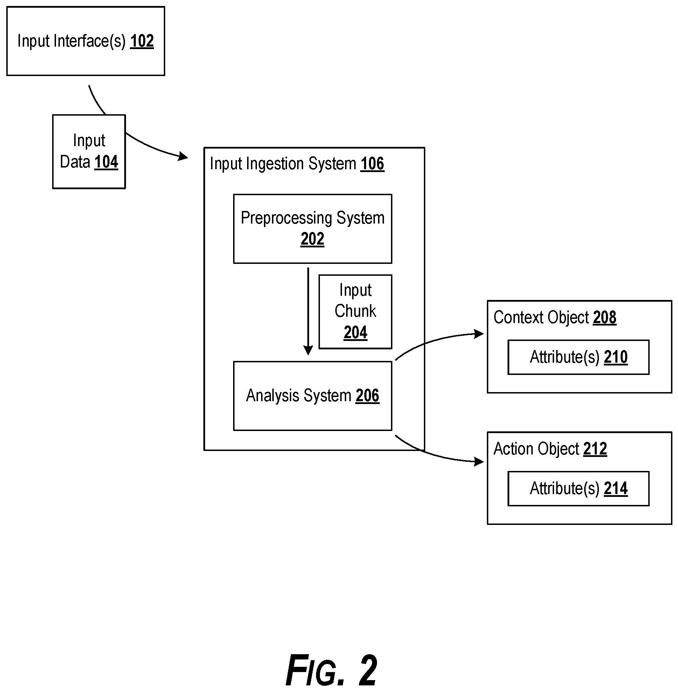

Figure 2 is a block diagram illustrating operations of an example implementation of input ingestion system 106. Preprocessing system 202 can receive input data 104 from input interfaces 102. Preprocessing system 202 can clean, segment, and organize raw inputs into chunks for downstream processing. Preprocessing operations can include various techniques such as natural language processing for text, signal processing for audio inputs, or image processing for visual data. Preprocessing system 202 can generate an input chunk 204 from input data 104. Each input chunk 204 can be a segment of, or a representation of a segment of (e.g., a summary or restatement of, an embedding of, etc.) the original input data 104. Input chunk 204 can be segmented to include a specific piece of information, command, or query from a user or an input system. These chunks are then forwarded to the analysis system 206.

Analysis system 206 can examine each chunk to determine its nature and the appropriate processing pathway. For instance, analysis system 206 can generate context objects 208 and populate the object with attributes 210. Analysis system 206 can generate action objects 212 and populate the object with attributes 214. These objects can be stored or passed to other components for further processing.

Preprocessing system 202 can be or include processing logic configured to parse unstructured inputs. Preprocessing system 202 can clean, segment, and organize raw input data into manageable chunks, referred to as input chunks 204. These chunks can be suitable for further analysis and processing by subsequent components of the machine-learned assistant system 100.

Preprocessing system 202 can employ various techniques to preprocess the input data. These techniques can be adapted to the nature of the input data. Natural language processing techniques can be employed to parse and structure text-based inputs. Preprocessing can include tokenization, where the text is divided into pieces such as words or phrases. Preprocessing can also include syntactic parsing, which analyzes the grammatical structure of the text (e.g., in the phrase "schedule my appointment at 3PM and remind me to get the mail," preprocessing system could associate "at 3PM" with "appointment" and not the subsequently requested reminder). Additionally, preprocessing can include entity recognition, which can be used to identify and categorize elements such as names, places, or dates. For audio inputs, signal processing techniques can be used to convert sounds into a digital format. This format can be analyzed further, for example, by extracting features or transcribing spoken words into text. Image processing techniques can be applied to visual inputs (or image-based representations of audio inputs, such as spectrograms).

Preprocessing system 202 can use a machine-learned preprocessing model (e.g., accessible via machine-learned model(s) 114) to processes input data 104. Preprocessing system 202 can input the input data into a machine-learned preprocessing model to generate one or more input chunks 204. The machine-learned preprocessing model can include a machine-learned model configured to receive an unstructured input and return a parsed output. In an example, a machine-learned preprocessing model includes a sequence processing model. In an example, a machine-learned preprocessing model can be provided a textual prompt that includes an instruction to perform chunking over a set of raw inputs.

Input chunk 204 can be or include semantically meaningful portions of an input. For short input data 104, a single chunk may be generated. For longer input data 104, multiple chunks may be generated.

Input chunk 204 can be generated using semantic segmentation. Semantic segmentation for textual content can include dividing the text or speech input into segments that represent distinct linguistic units (e.g., subject-verb-object pairings, adjective-noun pairings, phrases, clauses, sentences, paragraphs, etc.). Semantic segmentation for image content can include object recognition in images using an object recognition model. Semantic segmentation for speech content can include speaker recognition, in addition to text-based semantic segmentation on transcribed audio.

The creation of input chunk 204 can include direct excerpting from the input data, such as extracting a specific substring from a larger text that contains a statement (e.g., "I am hungry.") or entity ("123 Main Street"), or extracting a cropped portion of an image (e.g., surrounding a grocery item for adding to a grocery list).

The creation of input chunk 204 can include generating chunk content by processing the input using a machine-learned preprocessing model. For instance, a machine-learned model can process the input to return a synthesized set of chunks, where all context relevant to each chunk is associated with that chunk. For instance, a machine-learned preprocessing model can receive single- or multi-modal input data and generate, for each input chunk, a set of data descriptive of a particular semantic segment. For instance, an input can include an image of an ice cream carton accompanied by a speech input of "Remind me to go to the DMV and pick up some of this afterward." One semantic segment can correspond to the DMV reminder. One semantic segment can correspond to the reminder to pick up ice cream afterward. Preprocessor 202 can ingest the image and the speech data (e.g., transcribed, as audio, etc.) and output two chunks: a first chunk comprising data describing the DMV reminder and a second chunk comprising data describing the reminder to pick up ice cream afterward, where the second chunk can include information extracted from both the speech data and the image data.

Input chunk 204 can be or include a data object comprising the data of the designated chunk. Input chunk 204 can include a reference or copy of the original input for in-context processing of the chunk by downstream processes.

Analysis system 206 can be or include processing logic configured to process an input chunk and create an object for downstream storage or processing. Example processing logic and processing components are described herein (e.g., with respect to preprocessing system 202).

For example, analysis system 206 can use a machine-learned model (e.g., accessible via machine-learned model(s) 114) to processes input data 104. Analysis system 206 can input the chunk data into a machine-learned model to generate one or more output objects or data to populate one or more output objects. The machine-learned model can include a machine-learned model configured to receive chunk data and return an object data output. In an example, a machine-learned model includes a sequence processing model. In an example, a machine-learned model can be provided a textual prompt that includes an instruction to perform object data parsing from chunked inputs.

Analysis system 206 can identify input chunks that provide contextual information. Analysis system 206 can differentiate between context that may condition the behavior of the system (conditioning context) and context that may be used for recalling information (recall context). Conditioning context may include inputs that implicitly influence the system's future responses or actions, such as user preferences or long-term goals. Recall context, on the other hand, may include specific information that the system may need to remember for future retrieval, such as appointment details or task lists. By categorizing context into these types, analysis system 206 may adapt the machine-learned assistant system responses to user needs and behaviors.

Analysis system 206 may compute various attribute values for the context objects it generates. These attributes may include context type (e.g., conditioning or recall), priority level, and associations with other context objects. For example, a high-priority context object related to an upcoming deadline may be tagged accordingly and linked to related tasks or reminders. Determining these attributes may include using both predefined rules based on the input type and dynamic analysis using machine-learned models that predict attributes based on the input data's content and context.

Analysis system 206 can identify input chunks that provide action data. Actions can include tasks or operations that the machine-learned assistant system is to execute, which could range from sending data (e.g., an API call to control another system), storing data, deleting data, etc. Analysis system 206 can parse the input chunks to recognize command phrases and parameters. Analysis system 206 can map the action data to an action data structure that provides structured fields for instructions (e.g., code that can be executed to perform an API call, inputs to an API, etc.).

Analysis system 206 can also compute various attribute values for the action objects it creates. These attributes may include the time for execution, which could be immediately or at a scheduled later time depending on the urgency and the context. Other attributes may include associations with relevant context objects, which can provide additional data for the action's execution. For example, an action object for a meeting may link to a context object containing the meeting's agenda, a meeting location, other attendee contact cards, corresponding email messages or instant message threads, etc.

Context object 208 can be or include a structured object that stores context data. The object can possess data fields, methods, or other attributes. The object can be self-contained (e.g., contain direct copies of all data stored in associated with that object) or can contain one or more references to data stored elsewhere (e.g., containing a record identifier for retrieving data from a central database). Context object 208 can be an object native to a programming language (e.g., a Python object), can be expressed in JSON, or can be any other suitable type of data object.

Context object 208 can include input chunk 204. Context object 208 can include data extracted from input chunk 204 (e.g., data parsed therefrom, data generated therefrom, such as a summary thereof, etc.).

Context object 208 can include input data 104. Context object 208 can include data extracted from input data 104 (e.g., data parsed therefrom, data generated therefrom, such as a summary thereof, etc.).

Attributes 210 can include attributes that store input data (e.g., data based on input data 104, input chunk 204, etc.). Attributes 210 can include generated labels, tags, or feature values that contextualize the input data. These might include timestamps, priority data, location data, concurrent activity data, related entities, and historical interactions.

An attribute 210 can include a context type attribute that indicates whether the context is conditioning context or recall context. A machine-learned model can process input data for context object 208 can generate a classification output that indicates the context type. The machine-learned model can be trained based on a training dataset of context data and context types.

An attribute 210 can include a context type attribute that indicates that the input data provides an instruction for an action to perform. Instruction context can include data describing the interactions that invoke actions. While the action objects may generally be used for executing the actions, instruction context can be used to maintain an understanding of prior instructions, actions, and requests to inform future inferences.

Action object 212 can be or include a structured object that stores context data. The object can possess data fields, methods, or other attributes. The object can be self-contained (e.g., contain direct copies of all data stored in associated with that object) or can contain one or more references to data stored elsewhere (e.g., containing a record identifier for retrieving data from a central database).

Action object 212 can include input chunk 204. Action object 212 can include data extracted from input chunk 204 (e.g., data parsed therefrom, data generated therefrom, such as a summary thereof, etc.).

Action object 212 can include input data 104. Action object 212 can include data extracted from input data 104 (e.g., data parsed therefrom, data generated therefrom, such as a summary thereof, etc.).

Action object 212 can directly store such contextual information or can store or point to context object(s) that respectively store such contextual information.

Attributes 214 can include attributes that store input data (e.g., data based on input data 104, input chunk 204, etc.). Attributes 214 can include generated labels, tags, or feature values that contextualize the input data. These might include timestamps, priority data, location data, concurrent activity data, related entities, and historical interactions. Attributes 214 can include the type of action, priority, expected completion time, and any specific parameters needed to execute the action effectively.

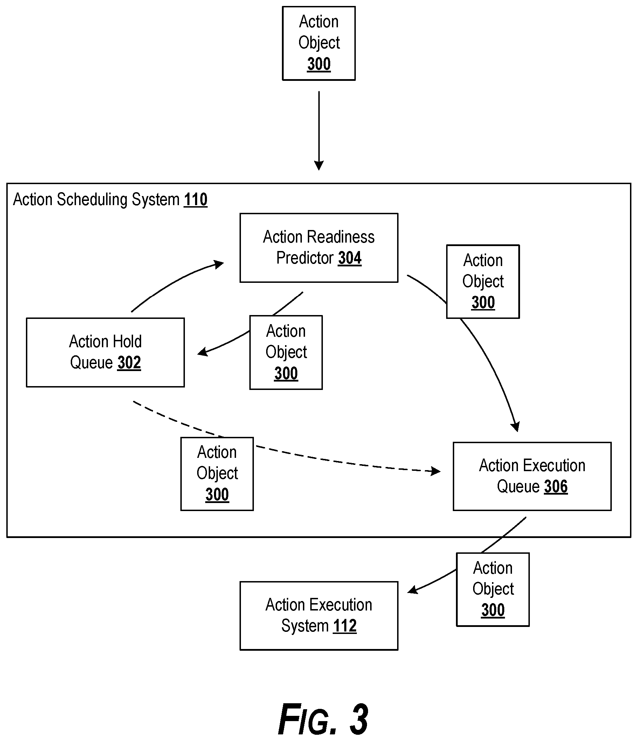

Figure 3 is a block diagram of an example implementation of action scheduling system 110. Action scheduling system 110 can receive an action object 300. Action scheduling system 110 can place action object 300 in action hold queue 302. An action readiness predictor 304 can process action object 300 to evaluate when to execute the action corresponding to action object 300. Actions in action hold queue 302 can be passed to action execution queue 306 upon satisfaction of a trigger condition. Action readiness predictor 304 can operate to place action objects 300 in action execution queue 306 based on an evaluation of action readiness predictor 304. Action execution queue 306 can contain action objects that are queued for execution. Action execution system 112 can retrieve action objects from the queue for execution.

Action hold queue 302 can temporarily store action objects that are awaiting further processing to determine an execution time based on the availability of context data and system resources. Action hold queue 302 can be implemented using various data structures and storage mechanisms that facilitate efficient insertion, retrieval, and management of action objects. Action objects within the queue that have a designated execution time can be periodically evaluated by action readiness predictor 304 to update the execution time. Action objects within the queue that have a designated execution time can exit the queue upon satisfaction of a trigger condition (e.g., reaching the execution time, presence of prerequisite data, etc.). Action objects within the queue can be periodically evaluated by action readiness predictor 304 to determine if the conditions for execution have been met. This evaluation can be based on the analysis of updated context data that may affect the readiness of the action for execution, such as the availability of required information or the completion of prerequisite actions. Actions can be re-prioritized or removed from the queue based on changes in user requirements or system conditions.

Action readiness predictor 304 can evaluate the readiness of actions stored in action hold queue 302. Action readiness predictor 304 can be implemented using one or more machine-learned models or rule-based systems. This assessment can include analyzing the current context data, dependencies among actions, and external factors that might influence the execution of the actions. For example, action readiness predictor 304 can use a machine-learned model to predict the availability of required data or resources needed to execute an action. This model can be trained on historical data that includes instances of action executions, their outcomes, and the context conditions under which they were performed. By applying this trained model, action readiness predictor 304 can estimate the likelihood of successful action execution at various future points in time, allowing it to select an opportune moment for action execution.

In addition to predictive modeling, action readiness predictor 304 can employ a set of predefined rules that govern execution readiness based on specific criteria. For instance, certain actions may require that specific types of context data be present in the system before they can be executed. These rules can be encoded within the action readiness predictor 304 to automatically check for the presence of such data and determine the readiness status accordingly.

Action readiness predictor 304 can also monitor the status of dependencies among actions. In some scenarios, the execution of one action may depend on the completion of one or more other actions. These dependencies may be identified in the action objects themselves. For instance, analysis system 206 can generate a plurality of action objects that contain references to each other along with an indication of execution order or dependency chains. Action readiness predictor 304 can track these dependencies and update the readiness status of dependent actions as soon as the prerequisite actions are completed.

Action readiness predictor 304 can be updated (e.g., trained) based on feedback from action execution system 112. If certain types of actions frequently encounter issues due to specific missing context data, action readiness predictor 304 can learn to prioritize the verification of this data in future readiness assessments. For instance, error messages generated or received by action execution system 112 can be returned to action readiness predictor 304 as a feedback signal. Reinforcement learning can be used to train action readiness predictor 304 to minimize the presence of error conditions.

Action execution queue 306 can be implemented using a variety of data structures that support efficient management of queued items, such as first-in-first-out (FIFO) queues, priority queues, or other suitable data structures.

Action execution queue 306 can manage the life cycle of action objects within the queue. When an action object is transferred from the action hold queue 302, it is enqueued in action execution queue 306. The enqueuing process can include assigning a priority level to the action, based on its attributes such as urgency, dependency, or impact. This priority level determines the action's position within the queue relative to other actions.

Action execution queue 306 can dynamically adjust the ordering of actions within the queue based on changes in context data or system conditions. For example, if a high-priority event occurs that requires immediate attention, the system can elevate the priority of related actions within the queue, ensuring their prompt execution. Conversely, if certain actions become less critical due to changes in circumstances, their priority can be lowered to defer their execution.

To further illustrate interactions between aspects of the present disclosure, consider the following hypothetical scenario. A user can interact with a machine-learned assistant system via a voice-activated device or a mobile application interface. The user states the following: "I'd like to use less energy in my home. I should find information on maintaining my dishwasher for maximum efficiency. Also, be sure to turn down the air conditioning while I'm on vacation." This statement is captured by the input interface(s) of the machine-learned assistant system.

The raw input data can include a transcription that is output by an automated speech recognition system and received by the input ingestion system. A machine-learned preprocessing model processes the input to segment it into structured data. In an example, the preprocessing model can return a list of chunks:

```
{
      "inputID": 12345,
      "time": "2024-07-01T00:00:00Z",
      "source": "voice",
      "chunks": [
             "I'd like to use less energy in my home.",
             "I should find information on maintaining my dishwasher for maximum
 efficiency.",
             "Also, be sure to turn down the air conditioning while I'm on vacation."
      ]
 }
```

Each chunk can be passed to analysis system 206. Analysis system 206 can evaluate each chunk.

For example, the chunk "I'd like to use less energy in my home." can be classified as conditioning context. A context object can be constructed that includes several attributes that characterize the input. These attributes may include a tag attribute that classifies the input as related to "energy savings" or similar categories, a source attribute that records the origin of the input (e.g., voice command, mobile app), temporal attributes that might record the time and date of the input, which can be useful for tracking user preferences over time, etc.

An example JSON pseudocode expression of the object:

```
 {
      "contextObject": {
             "id": 1,
             "type": "conditioning",
             "content": {
                   "text": "I'd like to use less energy in my home.", # the original chunk
                   "image": None, # no image provided for this object
                   ... # other modalities can be stored in like manner
             },
             "fullContext": {
                   "text": "I'd like to use less energy in my home. I should find information
 on maintaining my dishwasher for maximum efficiency. Also, be sure to turn down the air
 conditioning while I'm on vacation.", # the original input
                   "image": None, # no image provided in the original input
                   ... # other modalities can be stored in like manner
             },
             "labels": [
                   "energy savings",
                   "household",
             ],
             "source": "voice",
             "time": "2024-07-01T00:00:00Z",
             "location": "home",
 }
```

For example, the chunk "I should find information on maintaining my dishwasher for maximum efficiency." can be classified as recall context. An example JSON pseudocode expression of the object:

```
 {
      "contextObject": {
             "id": 2,
             "type": "recall",
             "content": {
                   "text": "I should find information on maintaining my dishwasher for
 maximum efficiency.", # the original chunk
                   "image": None, # no image provided for this object
                   ... # other modalities can be stored in like manner
             },
             "fullContext": {
                   "text": "I'd like to use less energy in my home. I should find information
 on maintaining my dishwasher for maximum efficiency. Also, be sure to turn down the air
 conditioning while I'm on vacation.", # the original input
                   "image": None, # no image provided in the original input
                   ... # other modalities can be stored in like manner
             },
             "labels": [
                   "energy savings",
                   "household",
                   "dishwasher",
                   "to-do",
                   "learning",
             ],
             "source": "voice",
             "time": "2024-07-01T00:00:00Z",
             "location": "home",
        }
 }
```

For example, the chunk "Also, be sure to turn down the air conditioning while I'm on vacation." can be classified as instruction context. An example JSON pseudocode expression of the object:

```
{
      "contextObject": {
             "id": 3,
             "type": "instruction",
             "content": {
                   "text": "Also, be sure to turn down the air conditioning while I'm on
                   vacation.", # the original chunk
                   "image": None, # no image provided for this object
                   ... # other modalities can be stored in like manner
             },
             "fullContext": {
                   "text": "I'd like to use less energy in my home. I should find information
 on maintaining my dishwasher for maximum efficiency. Also, be sure to turn down the air
 conditioning while I'm on vacation.", # the original input
                   "image": None, # no image provided in the original input
                   ... # other modalities can be stored in like manner
             },
             "labels": [
                   "vacation",
                   "HVAC",
             ],
             "source": "voice",
             "time": "2024-07-01T00:00:00Z",
             "location": "home",
 }
```

An action object can be created for the chunk "Also, be sure to turn down the air conditioning while I'm on vacation." For instance, an action object can be created that contains the above contextObject. An action object can be created that stores the context data associated with the above contextObject.

Analysis system 206 can identify a function to be executed to perform the action. Analysis system 206 can use a machine-learned model (e.g., a machine-learned sequence processing model) to process the context data from an instruction context object and return an identified function to execute (e.g., a function that invokes an API call to adjust an HVAC state). Analysis system 206 can use a machine-learned model (e.g., a machine-learned sequence processing model) to process the context data from an instruction context object and return input parameters to input to the function to perform the action (e.g., a mode, "cooling," a temperature setting, etc.).

Action scheduling system 110 can determine that the action is not yet ready for execution. For instance, action scheduling system 110 can determine that the user is not currently on vacation (e.g., based on an inference performed using one or more context signals). Action scheduling system 110 can determine that the user has a scheduled vacation for a particular date. Action scheduling system 110 can schedule the action to execute on that date by generating a date value and assigning the date value to the action object.

Action scheduling system 110 can also determine that the action is not yet ready to be fully executed. For instance, the user did not specify a temperature. An appropriate temperature setting for the HVAC that reduces energy consumption while managing air quality and humidity levels may be different depending on the day. As such, action scheduling system 110 can determine that a temperature setting is to be predicted by a machine-learned model at execution time. The action object can store reference to a prediction function to execute at execution time to predict a temperature.

An example JSON pseudocode expression of an action object:

```
{
      "actionObject": {
             "id": 4,
             "relatedContextObjectsIDs": [1, 2, 3]
             "executionDetails": {
                   "function": "adjustHVAC",
                   "parameters": {
                         "mode": "cooling",
                         "temperature": inferenceObject # to be executed to get temperature
                   },
             },
             "executionTime": "2024-08-01T00:00:00Z" # the vacation starts on August 1st
      }
 }
```

The action object can be queued in action hold queue 302. Action scheduling system 110 can periodically assess the action object to evaluate whether the scheduled time is still appropriate. For instance, if updated calendar data indicates a change in the user's plans, action scheduling system 110 can reschedule the action.

Upon reaching execution time, the action can be queued using an action execution queue 306. Action execution queue 306 can be dedicated to machine-learned assistant system 100 or can be an operating system or other system-level execution manager.

The action can be executed by performing inference to obtain the temperature based on the available context at inference time (e.g., the current weather conditions at the time). The action can be executed by using that temperature to populate an API call to communicate with a thermostat system to adjust a state of the HVAC system. For instances, control signals 116 can include an API call output via output interface(s) 118 over a network.

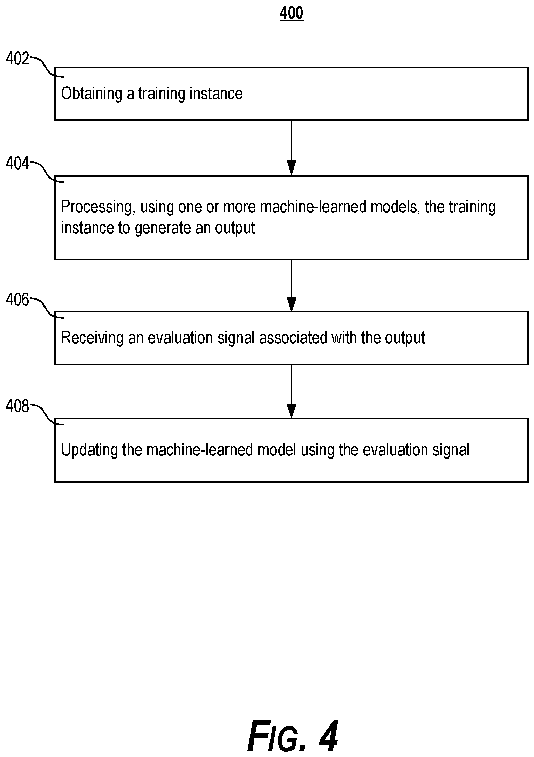

Figure 4 depicts a flowchart of a method 400 for training one or more machine-learned models according to aspects of the present disclosure. For instance, an example machine-learned model can include any one or more of the machine-learned assistant system, machine-learned preprocessing model, machine-learned description generation model, machine-learned context classification model, or any other machine-learned model or component described herein.

One or more portion(s) of example method 400 can be implemented by a computing system that includes one or more computing devices such as, for example, computing systems described with reference to the other figures. Each respective portion of example method 400 can be performed by any (or any combination) of one or more computing devices. Moreover, one or more portion(s) of example method 400 can be implemented on the hardware components of the device(s) described herein, for example, to train one or more systems or models. Figure 4 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 4 is described with reference to elements/terms described with respect to other systems and figures for exemplary illustrated purposes and is not meant to be limiting. One or more portions of example method 400 can be performed additionally, or alternatively, by other systems.

At 402, example method 400 can include obtaining a training instance. A set of training data can include a plurality of training instances divided between multiple datasets (e.g., a training dataset, a validation dataset, or testing dataset). A training instance can be labeled or unlabeled. Although referred to in example method 400 as a "training" instance, it is to be understood that runtime inferences can form training instances when a model is trained using an evaluation of the model's performance on that runtime instance (e.g., online training/learning). Example data types for the training instance and various tasks associated therewith are described throughout the present disclosure.

At 404, example method 400 can include processing, using one or more machine-learned models, the training instance to generate an output. The output can be directly obtained from the one or more machine-learned models or can be a downstream result of a chain of processing operations that includes an output of the one or more machine-learned models.

At 406, example method 400 can include receiving an evaluation signal associated with the output. The evaluation signal can be obtained using a loss function. Various determinations of loss can be used, such as mean squared error, likelihood loss, cross entropy loss, hinge loss, contrastive loss, or various other loss functions. The evaluation signal can be computed using known ground-truth labels (e.g., supervised learning), predicted or estimated labels (e.g., semi- or self-supervised learning), or without labels (e.g., unsupervised learning). The evaluation signal can be a reward (e.g., for reinforcement learning). The reward can be computed using a machine-learned reward model configured to generate rewards based on output(s) received. The reward can be computed using feedback data describing human feedback on the output(s).

At 48, example method 400 can include updating the machine-learned model using the evaluation signal. For example, values for parameters of the machine-learned model(s) can be learned, in some embodiments, using various training or learning techniques, such as, for example, backwards propagation. For example, the evaluation signal can be backpropagated from the output (or another source of the evaluation signal) through the machine-learned model(s) to update one or more parameters of the model(s) (e.g., based on a gradient of the evaluation signal with respect to the parameter value(s)). For example, system(s) containing one or more machine-learned models can be trained in an end-to-end manner. Gradient descent techniques can be used to iteratively update the parameters over a number of training iterations. In some implementations, performing backwards propagation of errors can include performing truncated backpropagation through time. Example method 400 can include implementing a number of generalization techniques (e.g., weight decays, dropouts, etc.) to improve the generalization capability of the models being trained.

In some implementations, example method 400 can be implemented for training a machine-learned model from an initialized state to a fully trained state (e.g., when the model exhibits a desired performance profile, such as based on accuracy, precision, recall, etc.).

In some implementations, example method 400 can be implemented for particular stages of a training procedure. For instance, in some implementations, example method 400 can be implemented for pre-training a machine-learned model. Pre-training can include, for instance, large-scale training over potentially noisy data to achieve a broad base of performance levels across a variety of tasks/data types.

In some implementations, example method 400 can be implemented for fine-tuning a machine-learned model. Fine-tuning can include, for instance, smaller-scale training on higher-quality (e.g., labeled, curated, etc.) data. Fine-tuning can affect all or a portion of the parameters of a machine-learned model. For example, various portions of the machine-learned model can be "frozen" for certain training stages. For example, parameters associated with an embedding space can be "frozen" during fine-tuning (e.g., to retain information learned from a broader domain(s) than present in the fine-tuning dataset(s)). In some implementations, example method 400 uses adapter modules. Adapters can be small trainable layers that are inserted between pre-existing layers of a pre-trained model. During the fine-tuning process, the original parameters of the pre-trained model are typically frozen, and only the parameters of the adapters are updated.

In some implementations, example method 400 can be implemented to execute parameter-efficient fine-tuning methods. Example methods can refine pre-trained models with minimal adjustments to the original parameters. This can be achieved by introducing trainable low-rank matrices that modify the behavior of the pre-trained weights without directly altering them. In some implementations, during fine-tuning, only these auxiliary matrices are updated, which significantly reduces the number of parameters that are trained.

An example fine-tuning approach includes reinforcement learning. Reinforcement learning can be based on user feedback on model performance during use.

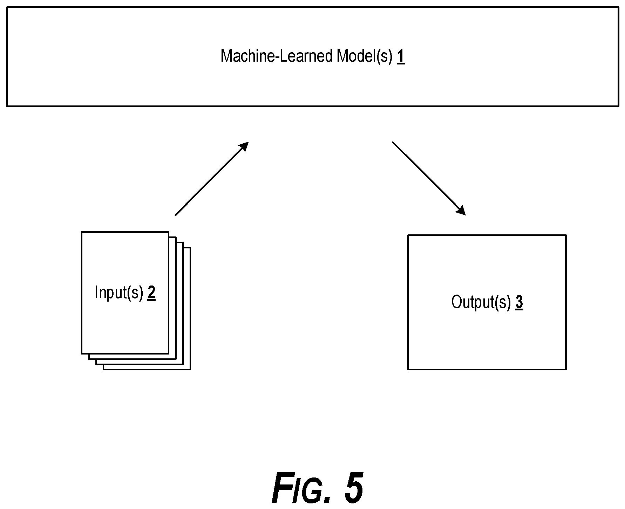

Figure 5 is a block diagram of an example processing flow for using machine-learned model(s) 1 to process input(s) 2 to generate output(s) 3.

Machine-learned model(s) 1 can be or include one or multiple machine-learned models or model components. Example machine-learned models can include neural networks (e.g., deep neural networks). Example machine-learned models can include non-linear models or linear models. Example machine-learned models can use other architectures in lieu of or in addition to neural networks. Example machine-learned models can include decision tree based models, support vector machines, hidden Markov models, Bayesian networks, linear regression models, k-means clustering models, etc.

Machine-learned model(s) 1 can be or include, or otherwise be representative of any one or more of the machine-learned models described above with respect to the preceding figures. For example, machine-learned model(s) 1 can be or include, or otherwise be representative of any one or more of the machine-learned assistant system, machine-learned preprocessing model, machine-learned description generation model, machine-learned context classification model, etc., or any other machine-learned model or component described herein. Although various features, variations, and implementations described below are described with respect to machine-learned model(s) 1, it is to be understood that such features, variations, and implementations are to be understood as described with respect to each of any one or more of the machine-learned assistant system, machine-learned preprocessing model, machine-learned description generation model, machine-learned context classification model, etc., any other machine-learned component described herein.

Example neural networks can include feed-forward neural networks, recurrent neural networks (RNNs), including long short-term memory (LSTM) based recurrent neural networks, convolutional neural networks (CNNs), diffusion models, generative-adversarial networks, or other forms of neural networks. Example neural networks can be deep neural networks. Some example machine-learned models can leverage an attention mechanism such as self-attention. For example, some example machine-learned models can include multi-headed self-attention models.

Machine-learned model(s) 1 can include a single or multiple instances of the same model configured to operate on data from input(s) 2. Machine-learned model(s) 1 can include multiple different models or multiple different model portions configured to operate on data from input(s) 2.

Machine-learned model(s) 1 can include an ensemble of different models that can cooperatively interact to process data from input(s) 2. For example, a model ensemble can include multiple models that have different attributes (e.g., different architectures, trained with different recipes, etc.). The ensemble can output an overall output based on the individual outputs of the constituent models. In this manner, for instance, the diverse constituent models can work together to provide system-level robustness by effectively aggregating over individual strengths and weaknesses of any given model. The respective individual outputs can be combined in a weighted combination, using a voting or routing mechanism, or a learned output layer (e.g., one or more feedforward or fully-connected layers).

Machine-learned model(s) 1 can employ a mixture-of-experts structure. *See, e.g.,* Zhou et al., Mixture-of-Experts with Expert Choice Routing, ARXIv:2202.09368v2 (Oct. 14, 2022). For example, different portions of a model can learn (explicitly or implicitly) different expertise areas, with pathways through the model being selected by a learned routing mechanism that engages the appropriate expert for a given input (e.g., a given portion of an input, such as on a per-token basis). For example, a feedforward network can be sparsely activated for a given portion of an input based on an output of a routing mechanism that processes the portion of the input. In this manner, for instance, the group of activated weights can form an "expert" that is selected by the router. On each forward pass, only a subset of the total model weights may be engaged, thereby decreasing a quantity of operations performed for processing a given input compared to a densely activated model. In this manner, for instance, the expressive and interpretive power of a high-parameter-count model can be achieved with more compute-efficient forward passes.

Input(s) 2 can generally include or otherwise represent various types of data. Input(s) 2 can include one type or many different types of data. Output(s) 3 can be data of the same type(s) or of different types of data as compared to input(s) 2. Output(s) 3 can include one type or many different types of data.

Input(s) 2 can be or include, or otherwise be representative of any one or more of the inputs described above with respect to the preceding figures. For example, input(s) 2 can be or include, or otherwise be representative of any one or more of input data 104, etc. Although various features, variations, and implementations described below are described with respect to input(s) 2, it is to be understood that such features, variations, and implementations are to be understood as described with respect to each of input data 104, etc., or any other input data to a component described herein.

Example data types for input(s) 2 or output(s) 3 include natural language text data, software code data (e.g., source code, object code, machine code, or any other form of computer-readable instructions or programming languages), machine code data (e.g., binary code, assembly code, or other forms of machine-readable instructions that can be executed directly by a computer's central processing unit), assembly code data (e.g., low-level programming languages that use symbolic representations of machine code instructions to program a processing unit), genetic data or other chemical or biochemical data, image data, audio data, audiovisual data, haptic data, biometric data, medical data, financial data, statistical data, geographical data, astronomical data, historical data, sensor data generally (e.g., digital or analog values, such as voltage or other absolute or relative level measurement values from a real or artificial input, such as from an audio sensor, light sensor, displacement sensor, etc.), and the like. Data can be raw or processed and can be in any format or schema.

In multimodal inputs 2 or outputs 3, example combinations of data types include image data and audio data, image data and natural language data, natural language data and software code data, image data and biometric data, sensor data and medical data, etc. It is to be understood that any combination of data types in an input 2 or an output 3 can be present.

An example input 2 can include one or multiple data types, such as the example data types noted above. An example output 3 can include one or multiple data types, such as the example data types noted above. The data type(s) of input 2 can be the same as or different from the data type(s) of output 3. It is to be understood that the example data types noted above are provided for illustrative purposes only. Data types contemplated within the scope of the present disclosure are not limited to those examples noted above.

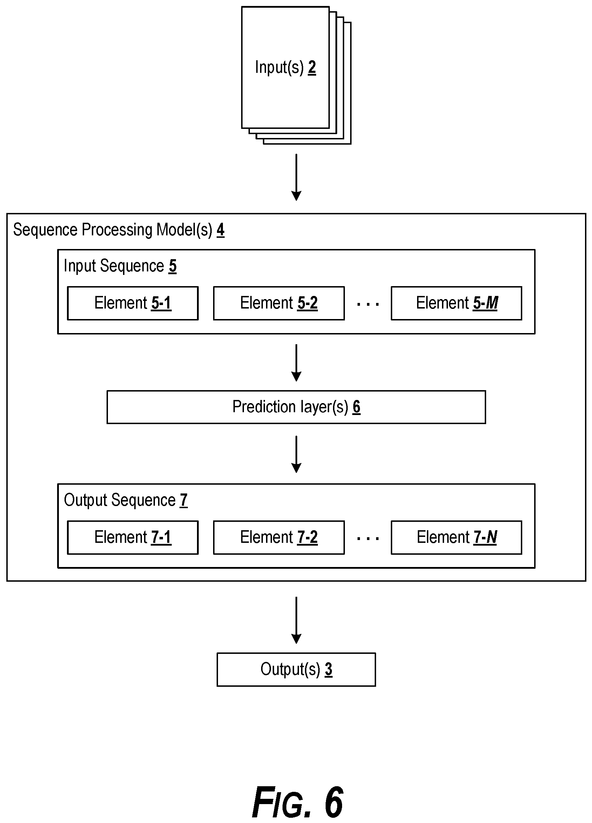

Figure 6 is a block diagram of an example implementation of an example machine-learned model configured to process sequences of information. For instance, an example implementation of machine-learned model(s) 1 can include machine-learned sequence processing model(s) 4. An example system can pass input(s) 2 to sequence processing model(s) 4. Sequence processing model(s) 4 can include one or more machine-learned components. Sequence processing model(s) 4 can process the data from input(s) 2 to obtain an input sequence 5. Input sequence 5 can include one or more input elements 5-1, 5-2, ... , *5-M,* etc. obtained from input(s) 2. Sequence processing model 4 can process input sequence 5 using prediction layer(s) 6 to generate an output sequence 7. Output sequence 7 can include one or more output elements 7-1, 7-2, ... , 7-*N*, etc. generated based on input sequence 5. The system can generate output(s) 3 based on output sequence 7.

Sequence processing model(s) 4 can include one or multiple machine-learned model components configured to ingest, generate, or otherwise reason over sequences of information. For example, some example sequence processing models in the text domain are referred to as "Large Language Models," or LLMs. *See, e.g.,* PaLM 2 Technical Report, GOOGLE, https://ai.google/static/documents/palm2techreport.pdf (n.d.). Other example sequence processing models can operate in other domains, such as image domains, *see, e.g.,* Dosovitskiy et al., An Image is Worth 16x16 Words: Transformers for Image Recognition at Scale, ARXIv:2010.11929v2 (Jun. 3, 2021), audio domains, *see, e.g.,* Agostinelli et al., MusicLM: Generating Music From Text, ARXIV:2301.11325v1 (Jan. 26, 2023), biochemical domains, *see,* e.g., Jumper et al., Highly accurate protein structure prediction with AlphaFold, 596 Nature 583 (Aug. 26, 2021), by way of example. Sequence processing model(s) 4 can process one or multiple types of data simultaneously. Sequence processing model(s) 4 can include relatively large models (e.g., more parameters, computationally expensive, etc.), relatively small models (e.g., fewer parameters, computationally lightweight, etc.), or both.

In general, sequence processing model(s) 4 can obtain input sequence 5 using data from input(s) 2. For instance, input sequence 5 can include a representation of data from input(s) 2 in a format understood by sequence processing model(s) 4. One or more machine-learned components of sequence processing model(s) 4 can ingest the data from input(s) 2, parse the data into pieces compatible with the processing architectures of sequence processing model(s) 4 (e.g., via "tokenization"), and project the pieces into an input space associated with prediction layer(s) 6 (e.g., via "embedding").

Sequence processing model(s) 4 can ingest the data from input(s) 2 and parse the data into a sequence of elements to obtain input sequence 5. For example, a portion of input data from input(s) 2 can be broken down into pieces that collectively represent the content of the portion of the input data. The pieces can provide the elements of the sequence.

Elements 5-1, 5-2, ... , 5-M can represent, in some cases, building blocks for capturing or expressing meaningful information in a particular data domain. For instance, the elements can describe "atomic units" across one or more domains. For example, for textual input source(s), the elements can correspond to groups of one or more words or sub-word components, such as sets of one or more characters.

For example, elements 5-1, 5-2, ... , 5-*M* can represent tokens obtained using a tokenizer. For instance, a tokenizer can process a given portion of an input source and output a series of tokens (e.g., corresponding to input elements 5-1, 5-2, ... , 5-*M*) that represent the portion of the input source. Various approaches to tokenization can be used. For instance, textual input source(s) can be tokenized using a byte-pair encoding (BPE) technique. *See, e.g.,* Kudo et al., SentencePiece: A simple and language independent subword tokenizer and detokenizerfor Neural Text Processing, PROCEEDINGS OF THE 2018 CONFERENCE ON EMPIRICAL METHODS IN NATURAL LANGUAGE PROCESSING (System Demonstrations), pages 66-71 (October 31-November 4, 2018), https://aclanthology.org/D18-2012.pdf. Image-based input source(s) can be tokenized by extracting and serializing patches from an image.

In general, arbitrary data types can be serialized and processed into input sequence 5. It is to be understood that element(s) 5-1, 5-2, ... , 5-M depicted in Figure 6 can be the tokens or can be the embedded representations thereof.

Prediction layer(s) 6 can predict one or more output elements 7-1, 7-2, ... , 7-*N* based on the input elements. Prediction layer(s) 6 can include one or more machine-learned model architectures, such as one or more layers of learned parameters that manipulate and transform the input(s) to extract higher-order meaning from, and relationships between, input element(s) 5-1, 5-2, ... , *5-M.* In this manner, for instance, example prediction layer(s) 6 can predict new output element(s) in view of the context provided by input sequence 5.

Prediction layer(s) 6 can evaluate associations between portions of input sequence 5 and a particular output element. These associations can inform a prediction of the likelihood that a particular output follows the input context. For example, consider the textual snippet, "The carpenter's toolbox was small and heavy. It was full of __." Example prediction layer(s) 6 can identify that "It" refers back to "toolbox" by determining a relationship between the respective embeddings. Example prediction layer(s) 6 can also link "It" to the attributes of the toolbox, such as "small" and "heavy." Based on these associations, prediction layer(s) 6 can, for instance, assign a higher probability to the word "nails" than to the word "sawdust."

A transformer is an example architecture that can be used in prediction layer(s) 4. *See, e.g.,* Vaswani et al., Attention Is All You Need, ARXIV:1706.03762v7 (Aug. 2, 2023). A transformer is an example of a machine-learned model architecture that uses an attention mechanism to compute associations between items within a context window. The context window can include a sequence that contains input sequence 5 and potentially one or more output element(s) 7-1, 7-2, ... , 7-N. A transformer block can include one or more attention layer(s) and one or more post-attention layer(s) (e.g., feedforward layer(s), such as a multi-layer perceptron).

Prediction layer(s) 6 can include other machine-learned model architectures in addition to or in lieu of transformer-based architectures. For example, recurrent neural networks (RNNs) and long short-term memory (LSTM) models can also be used, as well as convolutional neural networks (CNNs). In general, prediction layer(s) 6 can leverage various kinds of artificial neural networks that can understand or generate sequences of information.

Output sequence 7 can include or otherwise represent the same or different data types as input sequence 5. For instance, input sequence 5 can represent textual data, and output sequence 7 can represent textual data. Input sequence 5 can represent image, audio, or audiovisual data, and output sequence 7 can represent textual data (e.g., describing the image, audio, or audiovisual data). It is to be understood that prediction layer(s) 6, and any other interstitial model components of sequence processing model(s) 4, can be configured to receive a variety of data types in input sequence(s) 5 and output a variety of data types in output sequence(s) 7.

Output sequence 7 can have various relationships to input sequence 5. Output sequence 7 can be a continuation of input sequence 5. Output sequence 7 can be complementary to input sequence 5. Output sequence 7 can translate, transform, augment, or otherwise modify input sequence 5. Output sequence 7 can answer, evaluate, confirm, or otherwise respond to input sequence 5. Output sequence 7 can implement (or describe instructions for implementing) an instruction provided via input sequence 5.

Output sequence 7 can be generated autoregressively. For instance, for some applications, an output of one or more prediction layer(s) 6 can be passed through one or more output layers (e.g., softmax layer) to obtain a probability distribution over an output vocabulary (e.g., a textual or symbolic vocabulary) conditioned on a set of input elements in a context window. In this manner, for instance, output sequence 7 can be autoregressively generated by sampling a likely next output element, adding that element to the context window, and regenerating the probability distribution based on the updated context window, and sampling a likely next output element, and so forth.

Output sequence 7 can also be generated non-autoregressively. For instance, multiple output elements of output sequence 7 can be predicted together without explicit sequential conditioning on each other. *See, e.g.,* Saharia et al., Non-Autoregressive Machine Translation with Latent Alignments, ARXIV:2004.07437v3 (Nov. 16, 2020).

Output sequence 7 can include one or multiple portions or elements. In an example content generation configuration, output sequence 7 can include multiple elements corresponding to multiple portions of a generated output sequence (e.g., a textual sentence, values of a discretized waveform, computer code, etc.). In an example classification configuration, output sequence 7 can include a single element associated with a classification output. For instance, an output "vocabulary" can include a set of classes into which an input sequence is to be classified. For instance, a vision transformer block can pass latent state information to a multilayer perceptron that outputs a likely class value associated with an input image.

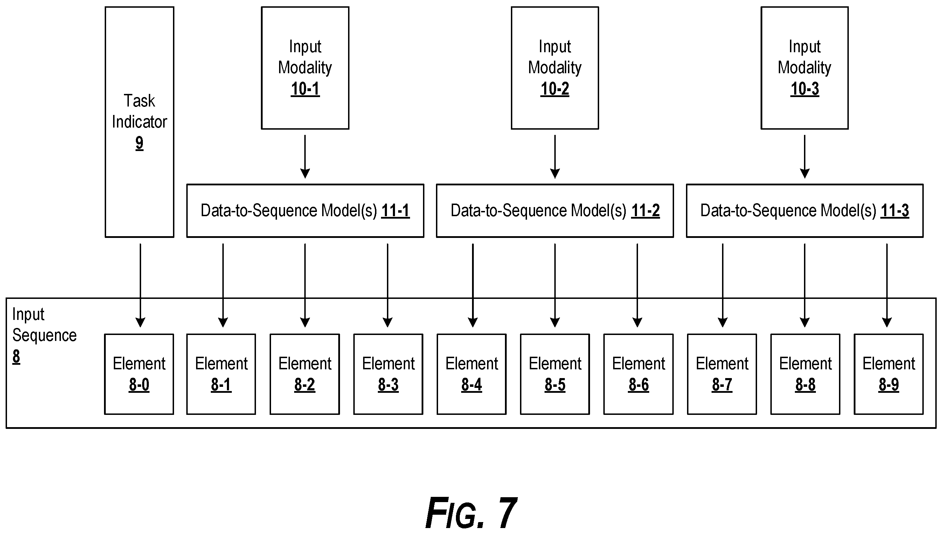

Figure 7 is a block diagram of an example technique for populating an example input sequence 8. Input sequence 8 can include various functional elements that form part of the model infrastructure, such as an element 8-0 obtained from a task indicator 9 that signals to any model(s) that process input sequence 8 that a particular task is being performed (e.g., to help adapt a performance of the model(s) to that particular task). Input sequence 8 can include various data elements from different data modalities. For instance, an input modality 10-1 can include one modality of data. A data-to-sequence model 11-1 can process data from input modality 10-1 to project the data into a format compatible with input sequence 8 (e.g., one or more vectors dimensioned according to the dimensions of input sequence 8) to obtain elements 8-1, 8-2, 8-3. Another input modality 10-2 can include a different modality of data. A data-to-sequence model 11-2 can project data from input modality 10-2 into a format compatible with input sequence 8 to obtain elements 8-4, 8-5, 8-6. Another input modality 10-3 can include yet another different modality of data. A data-to-sequence model 11-3 can project data from input modality 10-3 into a format compatible with input sequence 8 to obtain elements 8-7, 8-8, 8-9.

Input sequence 8 can be the same as or different from input sequence 5. Input sequence 8 can be a multimodal input sequence that contains elements that represent data from different modalities using a common dimensional representation. For instance, an embedding space can have P dimensions. Input sequence 8 can be configured to contain a plurality of elements that have P dimensions. In this manner, for instance, example implementations can facilitate information extraction and reasoning across diverse data modalities by projecting data into elements in the same embedding space for comparison, combination, or other computations therebetween.

For example, elements 8-0, ... , 8-9 can indicate particular locations within a multidimensional embedding space. Some elements can map to a set of discrete locations in the embedding space. For instance, elements that correspond to discrete members of a predetermined vocabulary of tokens can map to discrete locations in the embedding space that are associated with those tokens. Other elements can be continuously distributed across the embedding space. For instance, some data types can be broken down into continuously defined portions (e.g., image patches) that can be described using continuously distributed locations within the embedding space.

In some implementations, the expressive power of the embedding space may not be limited to meanings associated with any particular set of tokens or other building blocks. For example, a continuous embedding space can encode a spectrum of high-order information. An individual piece of information (e.g., a token) can map to a particular point in that space: for instance, a token for the word "dog" can be projected to an embedded value that points to a particular location in the embedding space associated with canine-related information. Similarly, an image patch of an image of a dog on grass can also be projected into the embedding space. In some implementations, the projection of the image of the dog can be similar to the projection of the word "dog" while also having similarity to a projection of the word "grass," while potentially being different from both. In some implementations, the projection of the image patch may not exactly align with any single projection of a single word. In some implementations, the projection of the image patch can align with a combination of the projections of the words "dog" and "grass." In this manner, for instance, a high-order embedding space can encode information that can be independent of data modalities in which the information is expressed.

Task indicator 9 can include a model or model component configured to identify a task being performed and inject, into input sequence 8, an input value represented by element 8-0 that signals which task is being performed. For instance, the input value can be provided as a data type associated with an input modality and projected along with that input modality (e.g., the input value can be a textual task label that is embedded along with other textual data in the input; the input value can be a pixel-based representation of a task that is embedded along with other image data in the input; etc.). The input value can be provided as a data type that differs from or is at least independent from other input(s). For instance, the input value represented by element 8-0 can be a learned within a continuous embedding space.

Input modalities 10-1, 10-2, and 10-3 can be associated with various different data types (e.g., as described above with respect to input(s) 2 and output(s) 3).

Data-to-sequence models 11-1, 11-2, and 11-3 can be the same or different from each other. Data-to-sequence models 11-1, 11-2, and 11-3 can be adapted to each respective input modality 10-1, 10-2, and 10-3. For example, a textual data-to-sequence model can subdivide a portion of input text and project the subdivisions into element(s) in input sequence 8 (e.g., elements 8-1, 8-2, 8-3, etc.). An image data-to-sequence model can subdivide an input image and project the subdivisions into element(s) in input sequence 8 (e.g., elements 8-4, 8-5, 8-6, etc.). An arbitrary datatype data-to-sequence model can subdivide an input of that arbitrary datatype and project the subdivisions into element(s) in input sequence 8 (e.g., elements 8-7, 8-8, 8-9, etc.).

Data-to-sequence models 11-1, 11-2, and 11-3 can form part of machine-learned sequence processing model(s) 4. Data-to-sequence models 11-1, 11-2, and 11-3 can be jointly trained with or trained independently from machine-learned sequence processing model(s) 4. Data-to-sequence models 11-1, 11-2, and 11-3 can be trained end-to-end with machine-learned sequence processing model(s) 4.

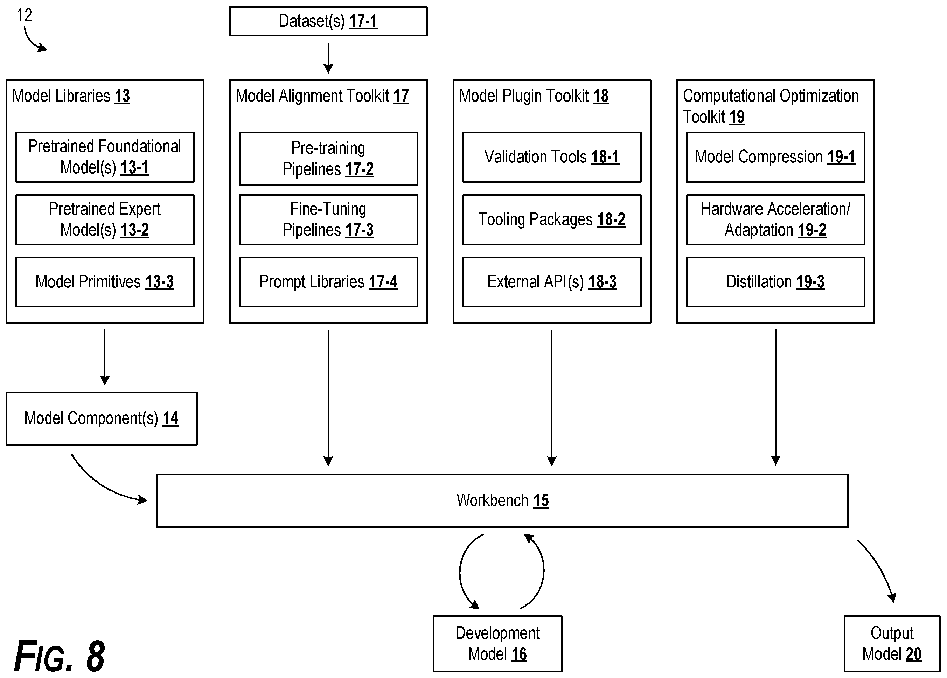

Figure 8 is a block diagram of an example model development platform 12 that can facilitate creation, adaptation, and refinement of example machine-learned models (e.g., machine-learned model(s) 1, sequence processing model(s) 4, etc.). Model development platform 12 can provide a number of different toolkits that developer systems can employ in the development of new or adapted machine-learned models.

Model development platform 12 can provide one or more model libraries 13 containing building blocks for new models. Model libraries 13 can include one or more pre-trained foundational models 13-1, which can provide a backbone of processing power across various tasks. Model libraries 13 can include one or more pre-trained expert models 13-2, which can be focused on performance in particular domains of expertise. Model libraries 13 can include various model primitives 13-3, which can provide low-level architectures or components (optionally pre-trained), which can be assembled in various arrangements as desired. Model primitives 13-3 can include a library of pre-trained adapters or LoRA modules that can adapt a baseline foundational model to align its outputs with a desired performance profile, augment model capabilities (e.g., to adapt to a different input modality, etc.), and the like.

Model development platform 12 can receive selections of various model components 14. Model development platform 12 can pass selected model components 14 to a workbench 15 that combines selected model components 14 into a development model 16.

Workbench 15 can facilitate further refinement and adaptation of development model 16 by leveraging a number of different toolkits integrated with model development platform 12. For example, workbench 15 can facilitate alignment of the development model 16 with a desired performance profile on various tasks using a model alignment toolkit 17.

Model alignment toolkit 17 can provide a number of tools for causing development model 16 to generate outputs aligned with desired behavioral characteristics. Alignment can include increasing an accuracy, precision, recall, etc. of model outputs. Alignment can include enforcing output styles, schema, or other preferential characteristics of model outputs. Alignment can be general or domain-specific. For instance, a pre-trained foundational model 13-1 can begin with an initial level of performance across multiple domains. Alignment of the pre-trained foundational model 13-1 can include improving a performance in a particular domain of information or tasks (e.g., even at the expense of performance in another domain of information or tasks).

Model alignment toolkit 17 can integrate one or more dataset(s) 17-1 for aligning development model 16. Curated dataset(s) 17-1 can include labeled or unlabeled training data. Dataset(s) 17-1 can be obtained from public domain datasets. Dataset(s) 17-1 can be obtained from private datasets associated with one or more developer system(s) for the alignment of bespoke machine-learned model(s) customized for private use-cases.

Pre-training pipelines 17-2 can include a machine-learned model training workflow configured to update development model 16 over large-scale, potentially noisy datasets. For example, pre-training can leverage unsupervised learning techniques (e.g., de-noising, etc.) to process large numbers of training instances to update model parameters from an initialized state and achieve a desired baseline performance. Pre-training pipelines 17-2 can leverage unlabeled datasets in dataset(s) 17-1 to perform pre-training. Workbench 15 can implement a pre-training pipeline 17-2 to pre-train development model 16.

Fine-tuning pipelines 17-3 can include a machine-learned model training workflow configured to refine the model parameters of development model 16 with higher-quality data. Fine-tuning pipelines 17-3 can update development model 16 by conducting supervised training with labeled dataset(s) in dataset(s) 17-1. Fine-tuning pipelines 17-3 can update development model 16 by conducting reinforcement learning using reward signals from user feedback signals. Workbench 15 can implement a fine-tuning pipeline 17-3 to fine-tune development model 16.

Prompt libraries 17-4 can include sets of inputs configured to induce behavior aligned with desired performance criteria. Prompt libraries 17-4 can include few-shot prompts (e.g., inputs providing examples of desired model outputs for prepending to a desired runtime query), chain-of-thought prompts (e.g., inputs providing step-by-step reasoning within the exemplars to facilitate thorough reasoning by the model), and the like.

Example prompts can be retrieved from an available repository of prompt libraries 17-4. Example prompts can be contributed by one or more developer systems using workbench 15.

**In** some implementations, pre-trained or fine-tuned models can achieve satisfactory performance without exemplars in the inputs. For instance, zero-shot prompts can include inputs that lack exemplars. Zero-shot prompts can be within a domain within a training dataset or outside of the training domain(s).

Prompt libraries 17-4 can include one or more prompt engineering tools. Prompt engineering tools can provide workflows for retrieving or learning optimized prompt values. Prompt engineering tools can facilitate directly learning prompt values (e.g., input element values) based one or more training iterations. Workbench 15 can implement prompt engineering tools in development model 16.

Prompt libraries 17-4 can include pipelines for prompt generation. For example, inputs can be generated using development model 16 itself or other machine-learned models. **In** this manner, for instance, a first model can process information about a task and output an input for a second model to process in order to perform a step of the task. The second model can be the same as or different from the first model. Workbench 15 can implement prompt generation pipelines in development model 16.

Prompt libraries 17-4 can include pipelines for context injection. For instance, a performance of development model 16 on a particular task can improve if provided with additional context for performing the task. Prompt libraries 17-4 can include software components configured to identify desired context, retrieve the context from an external source (e.g., a database, a sensor, etc.), and add the context to the input prompt. Workbench 15 can implement context injection pipelines in development model 16.

Although various training examples described herein with respect to model development platform 12 refer to "pre-training" and "fine-tuning," it is to be understood that model alignment toolkit 17 can generally support a wide variety of training techniques adapted for training a wide variety of machine-learned models. Example training techniques can correspond to the example training method 400 described above.

Model development platform 12 can include a model plugin toolkit 18. Model plugin toolkit 18 can include a variety of tools configured for augmenting the functionality of a machine-learned model by integrating the machine-learned model with other systems, devices, and software components. For instance, a machine-learned model can use tools to increase performance quality where appropriate. For instance, deterministic tasks can be offloaded to dedicated tools in lieu of probabilistically performing the task with an increased risk of error. For instance, instead of autoregressively predicting the solution to a system of equations, a machine-learned model can recognize a tool to call for obtaining the solution and pass the system of equations to the appropriate tool. The tool can be a traditional system of equations solver that can operate deterministically to resolve the system of equations. The output of the tool can be returned in response to the original query. In this manner, tool use can allow some example models to focus on the strengths of machine-learned models-e.g., understanding an intent in an unstructured request for a task-while augmenting the performance of the model by offloading certain tasks to a more focused tool for rote application of deterministic algorithms to a well-defined problem.

Model plugin toolkit 18 can include validation tools 18-1. Validation tools 18-1 can include tools that can parse and confirm output(s) of a machine-learned model. Validation tools 18-1 can include engineered heuristics that establish certain thresholds applied to model outputs. For example, validation tools 18-1 can ground the outputs of machine-learned models to structured data sources (e.g., to mitigate "hallucinations").

Model plugin toolkit 18 can include tooling packages 18-2 for implementing one or more tools that can include scripts or other executable code that can be executed alongside development model 16. Tooling packages 18-2 can include one or more inputs configured to cause machine-learned model(s) to implement the tools (e.g., few-shot prompts that induce a model to output tool calls in the proper syntax, etc.). Tooling packages 18-2 can include, for instance, fine-tuning training data for training a model to use a tool.

Model plugin toolkit 18 can include interfaces for calling external application programming interfaces (APIs) 18-3. For instance, in addition to or in lieu of implementing tool calls or tool code directly with development model 16, development model 16 can be aligned to output instruction that initiate API calls to send or obtain data via external systems.

Model plugin toolkit 18 can integrate with prompt libraries 17-4 to build a catalog of available tools for use with development model 16. For instance, a model can receive, in an input, a catalog of available tools, and the model can generate an output that selects a tool from the available tools and initiates a tool call for using the tool.

Model development platform 12 can include a computational optimization toolkit 19 for optimizing a computational performance of development model 16. For instance, tools for model compression 19-1 can allow development model 16 to be reduced in size while maintaining a desired level of performance. For instance, model compression 19-1 can include quantization workflows, weight pruning and sparsification techniques, etc. Tools for hardware acceleration 19-2 can facilitate the configuration of the model storage and execution formats to operate optimally on different hardware resources. For instance, hardware acceleration 19-2 can include tools for optimally sharding models for distributed processing over multiple processing units for increased bandwidth, lower unified memory requirements, etc. Tools for distillation 19-3 can provide for the training of lighter-weight models based on the knowledge encoded in development model 16. For instance, development model 16 can be a highly performant, large machine-learned model optimized using model development platform 12. To obtain a lightweight model for running in resource-constrained environments, a smaller model can be a "student model" that learns to imitate development model 16 as a "teacher model." In this manner, for instance, the investment in learning the parameters and configurations of development model 16 can be efficiently transferred to a smaller model for more efficient inference.

Workbench 15 can implement one, multiple, or none of the toolkits implemented in model development platform 12. Workbench 15 can output an output model 20 based on development model 16. Output model 20 can be a deployment version of development model 16. Output model 20 can be a development or training checkpoint of development model 16. Output model 20 can be a distilled, compressed, or otherwise optimized version of development model 16.

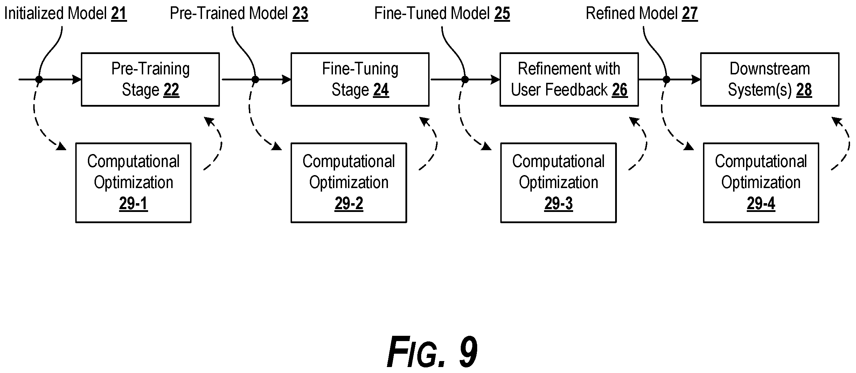

Figure 9 is a block diagram of an example training flow for training a machine-learned development model 16. One or more portion(s) of the example training flow can be implemented by a computing system that includes one or more computing devices such as, for example, computing systems described with reference to the other figures. Each respective portion of the example training flow can be performed by any (or any combination) of one or more computing devices. Moreover, one or more portion(s) of the example training flow can be implemented on the hardware components of the device(s) described herein, for example, to train one or more systems or models. FIG. 9 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. FIG. 9 is described with reference to elements/terms described with respect to other systems and figures for exemplary illustrated purposes and is not meant to be limiting. One or more portions of the example training flow can be performed additionally, or alternatively, by other systems.

Initially, development model 16 can persist in an initial state as an initialized model 21. Development model 16 can be initialized with weight values. Initial weight values can be random or based on an initialization schema. Initial weight values can be based on prior pre-training for the same or for a different model.

Initialized model 21 can undergo pre-training in a pre-training stage 22. Pre-training stage 22 can be implemented using one or more pre-training pipelines 17-2 over data from dataset(s) 17-1. Pre-training can be omitted, for example, if initialized model 21 is already pre-trained (e.g., development model 16 contains, is, or is based on a pre-trained foundational model or an expert model).

Pre-trained model 23 can then be a new version of development model 16, which can persist as development model 16 or as a new development model. Pre-trained model 23 can be the initial state if development model 16 was already pre-trained. Pre-trained model 23 can undergo fine-tuning in a fine-tuning stage 24. Fine-tuning stage 24 can be implemented using one or more fine-tuning pipelines 17-3 over data from dataset(s) 17-1. Fine-tuning can be omitted, for example, if a pre-trained model as satisfactory performance, if the model was already fine-tuned, or if other tuning approaches are preferred.

Fine-tuned model 29 can then be a new version of development model 16, which can persist as development model 16 or as a new development model. Fine-tuned model 29 can be the initial state if development model 16 was already fine-tuned. Fine-tuned model 29 can undergo refinement with user feedback 26. For instance, refinement with user feedback 26 can include reinforcement learning, optionally based on human feedback from human users of fine-tuned model 25. As reinforcement learning can be a form of fine-tuning, it is to be understood that fine-tuning stage 24 can subsume the stage for refining with user feedback 26. Refinement with user feedback 26 can produce a refined model 27. Refined model 27 can be output to downstream system(s) 28 for deployment or further development.

In some implementations, computational optimization operations can be applied before, during, or after each stage. For instance, initialized model 21 can undergo computational optimization 29-1 (e.g., using computational optimization toolkit 19) before pre-training stage 22. Pre-trained model 23 can undergo computational optimization 29-2 (e.g., using computational optimization toolkit 19) before fine-tuning stage 24. Fine-tuned model 25 can undergo computational optimization 29-3 (e.g., using computational optimization toolkit 19) before refinement with user feedback 26. Refined model 27 can undergo computational optimization 29-4 (e.g., using computational optimization toolkit 19) before output to downstream system(s) 28. Computational optimization(s) 29-1, . . . , 29-4 can all be the same, all be different, or include at least some different optimization techniques.

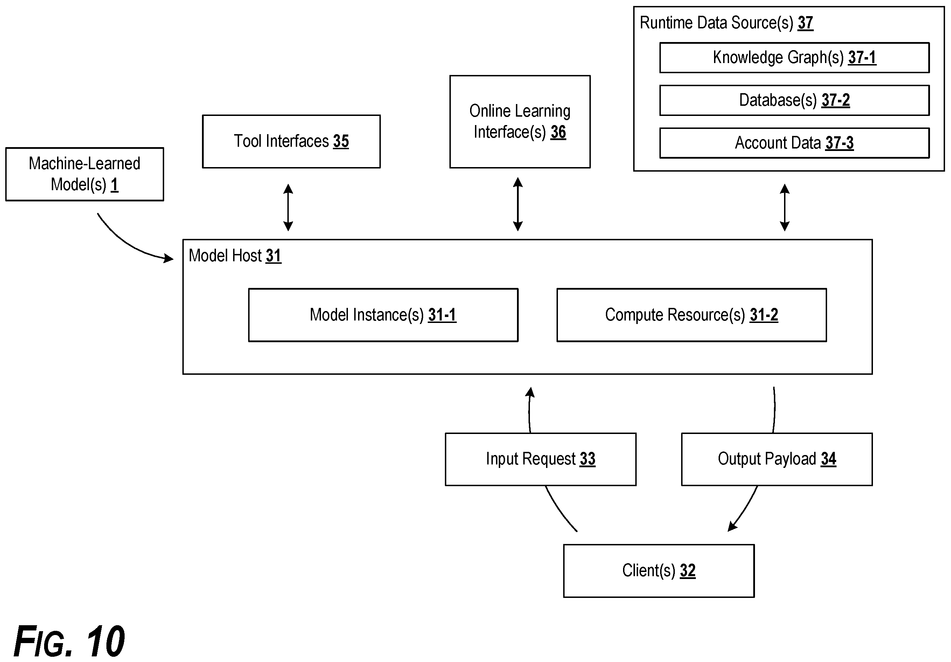

Figure 10 is a block diagram of an inference system for operating one or more machine-learned model(s) 1 to perform inference (e.g., for training, for deployment, etc.). A model host 31 can receive machine-learned model(s) 1. Model host 31 can host one or more model instance(s) 31-1, which can be one or multiple instances of one or multiple models. Model host 31 can host model instance(s) 31-1 using available compute resources 31-2 associated with model host 31.

Model host 31 can perform inference on behalf of one or more client(s) 32. Client(s) 32 can transmit an input request 33 to model host 31. Using input request 33, model host 31 can obtain input(s) 2 for input to machine-learned model(s) 1. Machine-learned model(s) 1 can process input(s) 2 to generate output(s) 3. Using output(s) 3, model host 31 can return an output payload 34 for responding to input request 33 from client(s) 32. Output payload 34 can include or be based on output(s) 3.

Model host 31 can leverage various other resources and tools to augment the inference task. For instance, model host 31 can communicate with tool interfaces 35 to facilitate tool use by model instance(s) 31-1. Tool interfaces 35 can include local or remote APIs. Tool interfaces 35 can include integrated scripts or other software functionality. Model host 31 can engage online learning interface(s) 36 to facilitate ongoing improvements to machine-learned model(s) 1. For instance, online learning interface(s) 36 can be used within reinforcement learning loops to retrieve user feedback on inferences served by model host 31. Model host 31 can access runtime data source(s) 37 for augmenting input(s) 2 with additional contextual information. For instance, runtime data source(s) 37 can include a knowledge graph 37-1 that facilitates structured information retrieval for information associated with input request(s) 33 (e.g., a search engine service). Runtime data source(s) 37 can include public or private, external or local database(s) 37-2 that can store information associated with input request(s) 33 for augmenting input(s) 2. Runtime data source(s) 37 can include account data 37-3 which can be retrieved in association with a user account corresponding to a client 32 for customizing the behavior of model host 31 accordingly.

Model host 31 can be implemented by one or multiple computing devices or systems. Client(s) 2 can be implemented by one or multiple computing devices or systems, which can include computing devices or systems shared with model host 31.

For example, model host 31 can operate on a server system that provides a machine-learning service to client device(s) that operate client(s) 32 (e.g., over a local or wide-area network). Client device(s) can be end-user devices used by individuals. Client device(s) can be server systems that operate client(s) 32 to provide various functionality as a service to downstream end-user devices.

In some implementations, model host 31 can operate on a same device or system as client(s) 32. Model host 31 can be a machine-learning service that runs on-device to provide machine-learning functionality to one or multiple applications operating on a client device, which can include an application implementing client(s) 32. Model host 31 can be a part of a same application as client(s) 32. For instance, model host 31 can be a subroutine or method implemented by one part of an application, and client(s) 32 can be another subroutine or method that engages model host 31 to perform inference functions within the application. It is to be understood that model host 31 and client(s) 32 can have various different configurations.

Model instance(s) 31-1 can include one or more machine-learned models that are available for performing inference. Model instance(s) 31-1 can include weights or other model components that are stored on in persistent storage, temporarily cached, or loaded into highspeed memory. Model instance(s) 31-1 can include multiple instance(s) of the same model (e.g., for parallel execution of more requests on the same model). Model instance(s) 31-1 can include instance(s) of different model(s). Model instance(s) 31-1 can include cached intermediate states of active or inactive model(s) used to accelerate inference of those models. For instance, an inference session with a particular model may generate significant amounts of computational results that can be re-used for future inference runs (e.g., using a KV cache for transformer-based models). These computational results can be saved in association with that inference session so that session can be executed more efficiently when resumed.

Compute resource(s) 31-2 can include one or more processors (central processing units, graphical processing units, tensor processing units, machine-learning accelerators, etc.) connected to one or more memory devices. Compute resource(s) 31-2 can include a dynamic pool of available resources shared with other processes. Compute resource(s) 31-2 can include memory devices large enough to fit an entire model instance in a single memory instance. Compute resource(s) 31-2 can also shard model instance(s) across multiple memory devices (e.g., using data parallelization or tensor parallelization, etc.). This can be done to increase parallelization or to execute a large model using multiple memory devices which individually might not be able to fit the entire model into memory.

Input request 33 can include data for input(s) 2. Model host 31 can process input request 33 to obtain input(s) 2. Input(s) 2 can be obtained directly from input request 33 or can be retrieved using input request 33. Input request 33 can be submitted to model host 31 via an API.

Model host 31 can perform inference over batches of input requests 33 in parallel. For instance, a model instance 31-1 can be configured with an input structure that has a batch dimension. Separate input(s) 2 can be distributed across the batch dimension (e.g., rows of an array). The separate input(s) 2 can include completely different contexts. The separate input(s) 2 can be multiple inference steps of the same task. The separate input(s) 2 can be staggered in an input structure, such that any given inference cycle can be operating on different portions of the respective input(s) 2. In this manner, for instance, model host 31 can perform inference on the batch in parallel, such that output(s) 3 can also contain the batch dimension and return the inference results for the batched input(s) 2 in parallel. In this manner, for instance, batches of input request(s) 33 can be processed in parallel for higher throughput of output payload(s) 34.

Output payload 34 can include or be based on output(s) 3 from machine-learned model(s) 1. Model host 31 can process output(s) 3 to obtain output payload 34. This can include chaining multiple rounds of inference (e.g., iteratively, recursively, across the same model(s) or different model(s)) to arrive at a final output for a task to be returned in output payload 34. Output payload 34 can be transmitted to client(s) 32 via an API.

Online learning interface(s) 36 can facilitate reinforcement learning of machine-learned model(s) 1. Online learning interface(s) 36 can facilitate reinforcement learning with human feedback (RLHF). Online learning interface(s) 36 can facilitate federated learning of machine-learned model(s) 1.

Model host 31 can access a library of pre-trained adapters or LoRA modules that can adapt a baseline model to align its outputs with a desired performance profile, augment model capabilities (e.g., to adapt to a different input modality, etc.), and the like. For instance, model host 31 can receive an input request to load a customized model, and model host 31 can retrieve one or more components to adapt a baseline model to the custom profile. Model host 31 can determine that a particular functionality is needed for a particular task (e.g., based on an output of a model that preprocesses an input) and retrieve a pre-trained component accordingly.

Model host 31 can execute machine-learned model(s) 1 to perform inference for various tasks using various types of data. For example, various different input(s) 2 and output(s) 3 can be used for various different tasks. In some implementations, input(s) 2 can be or otherwise represent image data. Machine-learned model(s) 1 can process the image data to generate an output. As an example, machine-learned model(s) 1 can process the image data to generate an image recognition output (e.g., a recognition of the image data, a latent embedding of the image data, an encoded representation of the image data, a hash of the image data, etc.). As another example, machine-learned model(s) 1 can process the image data to generate an image segmentation output. As another example, machine-learned model(s) 1 can process the image data to generate an image classification output. As another example, machine-learned model(s) 1 can process the image data to generate an image data modification output (e.g., an alteration of the image data, etc.). As another example, machine-learned model(s) 1 can process the image data to generate an encoded image data output (e.g., an encoded and/or compressed representation of the image data, etc.). As another example, machine-learned model(s) 1 can process the image data to generate an upscaled image data output. As another example, machine-learned model(s) 1 can process the image data to generate a prediction output.

In some implementations, the task is a computer vision task. In some cases, input(s) 2 includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

In some implementations, input(s) 2 can be or otherwise represent natural language data. Machine-learned model(s) 1 can process the natural language data to generate an output. As an example, machine-learned model(s) 1 can process the natural language data to generate a language encoding output. As another example, machine-learned model(s) 1 can process the natural language data to generate a latent text embedding output. As another example, machine-learned model(s) 1 can process the natural language data to generate a translation output. As another example, machine-learned model(s) 1 can process the natural language data to generate a classification output. As another example, machine-learned model(s) 1 can process the natural language data to generate a textual segmentation output. As another example, machine-learned model(s) 1 can process the natural language data to generate a semantic intent output. As another example, machine-learned model(s) 1 can process the natural language data to generate an upscaled text or natural language output (e.g., text or natural language data that is higher quality than the input text or natural language, etc.). As another example, machine-learned model(s) 1 can process the natural language data to generate a prediction output (e.g., one or more predicted next portions of natural language content).

In some implementations, input(s) 2 can be or otherwise represent speech data (e.g., data describing spoken natural language, such as audio data, textual data, etc.). Machine-learned model(s) 1 can process the speech data to generate an output. As an example, machine-learned model(s) 1 can process the speech data to generate a speech recognition output. As another example, machine-learned model(s) 1 can process the speech data to generate a speech translation output. As another example, machine-learned model(s) 1 can process the speech data to generate a latent embedding output. As another example, machine-learned model(s) 1 can process the speech data to generate an encoded speech output (e.g., an encoded and/or compressed representation of the speech data, etc.). As another example, machine-learned model(s) 1 can process the speech data to generate an upscaled speech output (e.g., speech data that is higher quality than the input speech data, etc.). As another example, machine-learned model(s) 1 can process the speech data to generate a textual representation output (e.g., a textual representation of the input speech data, etc.). As another example, machine-learned model(s) 1 can process the speech data to generate a prediction output.

In some implementations, input(s) 2 can be or otherwise represent latent encoding data (e.g., a latent space representation of an input, etc.). Machine-learned model(s) 1 can process the latent encoding data to generate an output. As an example, machine-learned model(s) 1 can process the latent encoding data to generate a recognition output. As another example, machine-learned model(s) 1 can process the latent encoding data to generate a reconstruction output. As another example, machine-learned model(s) 1 can process the latent encoding data to generate a search output. As another example, machine-learned model(s) 1 can process the latent encoding data to generate a reclustering output. As another example, machine-learned model(s) 1 can process the latent encoding data to generate a prediction output.

In some implementations, input(s) 2 can be or otherwise represent statistical data. Statistical data can be, represent, or otherwise include data computed and/or calculated from some other data source. Machine-learned model(s) 1 can process the statistical data to generate an output. As an example, machine-learned model(s) 1 can process the statistical data to generate a recognition output. As another example, machine-learned model(s) 1 can process the statistical data to generate a prediction output. As another example, machine-learned model(s) 1 can process the statistical data to generate a classification output. As another example, machine-learned model(s) 1 can process the statistical data to generate a segmentation output. As another example, machine-learned model(s) 1 can process the statistical data to generate a visualization output. As another example, machine-learned model(s) 1 can process the statistical data to generate a diagnostic output.

In some implementations, input(s) 2 can be or otherwise represent sensor data. Machine-learned model(s) 1 can process the sensor data to generate an output. As an example, machine-learned model(s) 1 can process the sensor data to generate a recognition output. As another example, machine-learned model(s) 1 can process the sensor data to generate a prediction output. As another example, machine-learned model(s) 1 can process the sensor data to generate a classification output. As another example, machine-learned model(s) 1 can process the sensor data to generate a segmentation output. As another example, machine-learned model(s) 1 can process the sensor data to generate a visualization output. As another example, machine-learned model(s) 1 can process the sensor data to generate a diagnostic output. As another example, machine-learned model(s) 1 can process the sensor data to generate a detection output.

In some implementations, machine-learned model(s) 1 can be configured to perform a task that includes encoding input data for reliable and/or efficient transmission or storage (and/or corresponding decoding). For example, the task may be an audio compression task. The input may include audio data and the output may comprise compressed audio data. In another example, the input includes visual data (e.g. one or more images or videos), the output comprises compressed visual data, and the task is a visual data compression task. In another example, the task may comprise generating an embedding for input data (e.g. input audio or visual data). In some cases, the input includes audio data representing a spoken utterance and the task is a speech recognition task. The output may comprise a text output which is mapped to the spoken utterance. In some cases, the task comprises encrypting or decrypting input data. In some cases, the task comprises a microprocessor performance task, such as branch prediction or memory address translation.

In some implementations, the task is a generative task, and machine-learned model(s) 1 can be configured to output content generated in view of input(s) 2. For instance, input(s) 2 can be or otherwise represent data of one or more modalities that encodes context for generating additional content.

In some implementations, the task can be a text completion task. Machine-learned model(s) 1 can be configured to process input(s) 2 that represent textual data and to generate output(s) 3 that represent additional textual data that completes a textual sequence that includes input(s) 2. For instance, machine-learned model(s) 1 can be configured to generate output(s) 3 to complete a sentence, paragraph, or portion of text that follows from a portion of text represented by input(s) 2.

In some implementations, the task can be an instruction following task. Machine-learned model(s) 1 can be configured to process input(s) 2 that represent instructions to perform a function and to generate output(s) 3 that advance a goal of satisfying the instruction function (e.g., at least a step of a multi-step procedure to perform the function). Output(s) 3 can represent data of the same or of a different modality as input(s) 2. For instance, input(s) 2 can represent textual data (e.g., natural language instructions for a task to be performed) and machine-learned model(s) 1 can process input(s) 2 to generate output(s) 3 that represent textual data responsive to the instructions (e.g., natural language responses, programming language responses, machine language responses, etc.). Input(s) 2 can represent image data (e.g., image-based instructions for a task to be performed, optionally accompanied by textual instructions) and machine-learned model(s) 1 can process input(s) 2 to generate output(s) 3 that represent textual data responsive to the instructions (e.g., natural language responses, programming language responses, machine language responses, etc.). One or more output(s) 3 can be iteratively or recursively generated to sequentially process and accomplish steps toward accomplishing the requested functionality. For instance, an initial output can be executed by an external system or be processed by machine-learned model(s) 1 to complete an initial step of performing a function. Multiple steps can be performed, with a final output being obtained that is responsive to the initial instructions.

In some implementations, the task can be a question answering task. Machine-learned model(s) 1 can be configured to process input(s) 2 that represent a question to answer and to generate output(s) 3 that advance a goal of returning an answer to the question (e.g., at least a step of a multi-step procedure to perform the function). Output(s) 3 can represent data of the same or of a different modality as input(s) 2. For instance, input(s) 2 can represent textual data (e.g., natural language instructions for a task to be performed) and machine-learned model(s) 1 can process input(s) 2 to generate output(s) 3 that represent textual data responsive to the question (e.g., natural language responses, programming language responses, machine language responses, etc.). Input(s) 2 can represent image data (e.g., image-based instructions for a task to be performed, optionally accompanied by textual instructions) and machine-learned model(s) 1 can process input(s) 2 to generate output(s) 3 that represent textual data responsive to the question (e.g., natural language responses, programming language responses, machine language responses, etc.). One or more output(s) 3 can be iteratively or recursively generated to sequentially process and accomplish steps toward answering the question. For instance, an initial output can be executed by an external system or be processed by machine-learned model(s) 1 to complete an initial step of obtaining an answer to the question (e.g., querying a database, performing a computation, executing a script, etc.). Multiple steps can be performed, with a final output being obtained that is responsive to the question.

In some implementations, the task can be an image generation task. Machine-learned model(s) 1 can be configured to process input(s) 2 that represent context regarding a desired portion of image content. The context can include text data, image data, audio data, etc. Machine-learned model(s) 1 can be configured to generate output(s) 3 that represent image data that depicts imagery related to the context. For instance, machine-learned model(s) 1 can be configured to generate pixel data of an image. Values for channel(s) associated with the pixels in the pixel data can be selected based on the context (e.g., based on a probability determined based on the context).

In some implementations, the task can be an audio generation task. Machine-learned model(s) 1 can be configured to process input(s) 2 that represent context regarding a desired portion of audio content. The context can include text data, image data, audio data, etc. Machine-learned model(s) 1 can be configured to generate output(s) 3 that represent audio data related to the context. For instance, machine-learned model(s) 1 can be configured to generate waveform data in the form of an image (e.g., a spectrogram). Values for channel(s) associated with pixels of the image can be selected based on the context. Machine-learned model(s) 1 can be configured to generate waveform data in the form of a sequence of discrete samples of a continuous waveform. Values of the sequence can be selected based on the context (e.g., based on a probability determined based on the context).

In some implementations, the task can be a data generation task. Machine-learned model(s) 1 can be configured to process input(s) 2 that represent context regarding a desired portion of data (e.g., data from various data domains, such as sensor data, image data, multimodal data, statistical data, etc.). The desired data can be, for instance, synthetic data for training other machine-learned models. The context can include arbitrary data type(s). Machine-learned model(s) 1 can be configured to generate output(s) 3 that represent data that aligns with the desired data. For instance, machine-learned model(s) 1 can be configured to generate data values for populating a dataset. Values for the data object(s) can be selected based on the context (e.g., based on a probability determined based on the context).

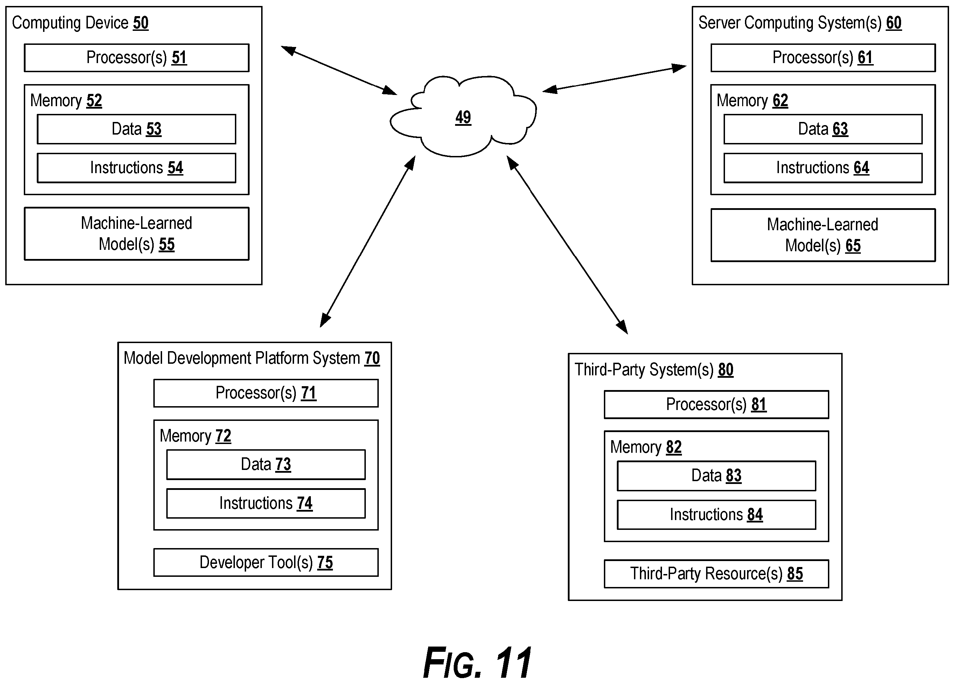

Figure 11 is a block diagram of an example networked computing system that can perform aspects of example implementations of the present disclosure. The system can include a number of computing devices and systems that are communicatively coupled over a network 49. An example computing device 50 is described to provide an example of a computing device that can perform any aspect of the present disclosure (e.g., implementing model host 31, client(s) 32, or both). An example server computing system 60 is described as an example of a server computing system that can perform any aspect of the present disclosure (e.g., implementing model host 31, client(s) 32, or both). Computing device 50 and server computing system(s) 60 can cooperatively interact (e.g., over network 49) to perform any aspect of the present disclosure (e.g., implementing model host 31, client(s) 32, or both). Model development platform system 70 is an example system that can host or serve model development platform(s) 12 for development of machine-learned models. Third-party system(s) 80 are example system(s) with which any of computing device 50, server computing system(s) 60, or model development platform system(s) 70 can interact in the performance of various aspects of the present disclosure (e.g., engaging third-party tools, accessing third-party databases or other resources, etc.).

Network 49 can be any type of communications network, such as a local area network (e.g., intranet), wide area network (e.g., Internet), or some combination thereof and can include any number of wired or wireless links. In general, communication over network 49 can be carried via any type of wired or wireless connection, using a wide variety of communication protocols (e.g., TCP/IP, HTTP, SMTP, FTP), encodings or formats (e.g., HTML, XML), or protection schemes (e.g., VPN, secure HTTP, SSL). Network 49 can also be implemented via a system bus. For instance, one or more devices or systems of Figure 11 can be co-located with, contained by, or otherwise integrated into one or more other devices or systems.

Computing device 50 can be any type of computing device, such as, for example, a personal computing device (e.g., laptop or desktop), a mobile computing device (e.g., smartphone or tablet), a gaming console or controller, a wearable computing device, an embedded computing device, a server computing device, a virtual machine operating on a host device, or any other type of computing device. Computing device 50 can be a client computing device. Computing device 50 can be an end-user computing device. Computing device 50 can be a computing device of a service provided that provides a service to an end user (who may use another computing device to interact with computing device 50).

Computing device 50 can include one or more processors 51 and a memory 52. Processor(s) 51 can be any suitable processing device (e.g., a processor core, a microprocessor, an ASIC, an FPGA, a controller, a microcontroller, etc.) and can be one processor or a plurality of processors that are operatively connected. Memory 52 can include one or more non-transitory computer-readable storage media, such as HBM, RAM, ROM, EEPROM, EPROM, flash memory devices, magnetic disks, etc., and combinations thereof. Memory 52 can store data 53 and instructions 54 which can be executed by processor(s) 51 to cause computing device 50 to perform operations. The operations can implement any one or multiple features described herein. The operations can implement example methods and techniques described herein.

Computing device 50 can also include one or more input components that receive user input. For example, a user input component can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, camera, LIDAR, a physical keyboard or other buttons, or other means by which a user can provide user input.

Computing device 50 can store or include one or more machine-learned models 55. Machine-learned models 55 can include one or more machine-learned model(s) 1, such as a sequence processing model 4. Machine-learned models 55 can include one or multiple model instance(s) 31-1. Machine-learned model(s) 55 can be received from server computing system(s) 60, model development platform system 70, third party system(s) 80 (e.g., an application distribution platform), or developed locally on computing device 50. Machine-learned model(s) 55 can be loaded into memory 52 and used or otherwise implemented by processor(s) 51. Computing device 50 can implement multiple parallel instances of machine-learned model(s) 55.

Server computing system(s) 60 can include one or more processors 61 and a memory 62. Processor(s) 61 can be any suitable processing device (e.g., a processor core, a microprocessor, an ASIC, an FPGA, a controller, a microcontroller, etc.) and can be one processor or a plurality of processors that are operatively connected. Memory 62 can include one or more non-transitory computer-readable storage media, such as HBM, RAM, ROM, EEPROM, EPROM, flash memory devices, magnetic disks, etc., and combinations thereof. Memory 62 can store data 63 and instructions 64 which can be executed by processor(s) 61 to cause server computing system(s) 60 to perform operations. The operations can implement any one or multiple features described herein. The operations can implement example methods and techniques described herein.

In some implementations, server computing system 60 includes or is otherwise implemented by one or multiple server computing devices. In instances in which server computing system 60 includes multiple server computing devices, such server computing devices can operate according to sequential computing architectures, parallel computing architectures, or some combination thereof.

Server computing system 60 can store or otherwise include one or more machine-learned models 65. Machine-learned model(s) 65 can be the same as or different from machine-learned model(s) 55. Machine-learned models 65 can include one or more machine-learned model(s) 1, such as a sequence processing model 4. Machine-learned models 65 can include one or multiple model instance(s) 31-1. Machine-learned model(s) 65 can be received from computing device 50, model development platform system 70, third party system(s) 80, or developed locally on server computing system(s) 60. Machine-learned model(s) 65 can be loaded into memory 62 and used or otherwise implemented by processor(s) 61. Server computing system(s) 60 can implement multiple parallel instances of machine-learned model(s) 65.

In an example configuration, machine-learned models 65 can be included in or otherwise stored and implemented by server computing system 60 to establish a client-server relationship with computing device 50 for serving model inferences. For instance, server computing system(s) 60 can implement model host 31 on behalf of client(s) 32 on computing device 50. For instance, machine-learned models 65 can be implemented by server computing system 60 as a portion of a web service (e.g., remote machine-learned model hosting service, such as an online interface for performing machine-learned model operations over a network on server computing system(s) 60). For instance, server computing system(s) 60 can communicate with computing device 50 over a local intranet or internet connection. For instance, computing device 50 can be a workstation or endpoint in communication with server computing system(s) 60, with implementation of machine-learned models 65 being managed by server computing system(s) 60 to remotely perform inference (e.g., for runtime or training operations), with output(s) returned (e.g., cast, streamed, etc.) to computing device 50. Machine-learned models 65 can work cooperatively or interoperatively with machine-learned models 55 on computing device 50 to perform various tasks.

Model development platform system(s) 70 can include one or more processors 71 and a memory 72. Processor(s) 71 can be any suitable processing device (e.g., a processor core, a microprocessor, an ASIC, an FPGA, a controller, a microcontroller, etc.) and can be one processor or a plurality of processors that are operatively connected. Memory 72 can include one or more non-transitory computer-readable storage media, such as HBM, RAM, ROM, EEPROM, EPROM, flash memory devices, magnetic disks, etc., and combinations thereof. Memory 72 can store data 73 and instructions 74 which can be executed by processor(s) 71 to cause model development platform system(s) 70 to perform operations. The operations can implement any one or multiple features described herein. The operations can implement example methods and techniques described herein. Example operations include the functionality described herein with respect to model development platform 12. This and other functionality can be implemented by developer tool(s) 75.

Third-party system(s) 80 can include one or more processors 81 and a memory 82. Processor(s) 81 can be any suitable processing device (e.g., a processor core, a microprocessor, an ASIC, an FPGA, a controller, a microcontroller, etc.) and can be one processor or a plurality of processors that are operatively connected. Memory 82 can include one or more non-transitory computer-readable storage media, such as HBM, RAM, ROM, EEPROM, EPROM, flash memory devices, magnetic disks, etc., and combinations thereof. Memory 82 can store data 83 and instructions 84 which can be executed by processor(s) 81 to cause third-party system(s) 80 to perform operations. The operations can implement any one or multiple features described herein. The operations can implement example methods and techniques described herein. Example operations include the functionality described herein with respect to tools and other external resources called when training or performing inference with machine-learned model(s) 1, 4, 16, 20, 55, 65, etc. (e.g., third-party resource(s) 85).

Figure 11 illustrates one example arrangement of computing systems that can be used to implement the present disclosure. Other computing system configurations can be used as well. For example, in some implementations, one or both of computing system 50 or server computing system(s) 60 can implement all or a portion of the operations of model development platform system 70. For example, computing system 50 or server computing system(s) 60 can implement developer tool(s) 75 (or extensions thereof) to develop, update/train, or refine machine-learned models 1, 4, 16, 20, 55, 65, etc. using one or more techniques described herein with respect to model alignment toolkit 17. In this manner, for instance, computing system 50 or server computing system(s) 60 can develop, update/train, or refine machine-learned models based on local datasets (e.g., for model personalization/customization, as permitted by user data preference selections).

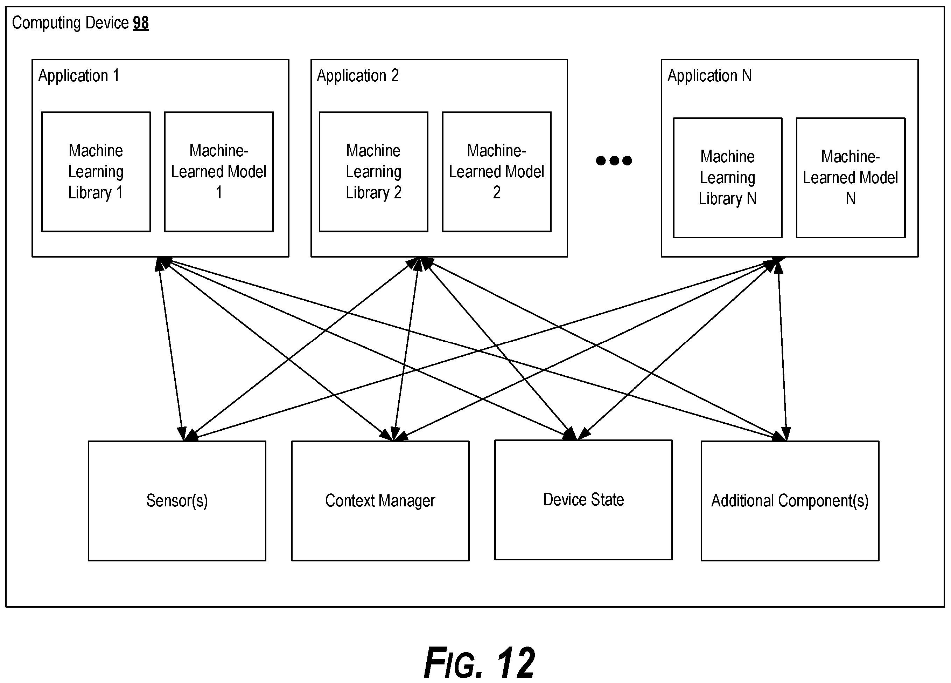

Figure 12 is a block diagram of an example computing device 98 that performs according to example embodiments of the present disclosure. Computing device 98 can be a user computing device or a server computing device (e.g., computing device 50, server computing system(s) 60, etc.). Computing device 98 can implement model host 31. For instance, computing device 98 can include a number of applications (e.g., applications 1 through N). Each application can contain its own machine learning library and machine-learned model(s). For example, each application can include a machine-learned model. Example applications include a text messaging application, an email application, a dictation application, a virtual keyboard application, a browser application, etc. As illustrated in Figure 12, each application can communicate with a number of other components of the computing device, such as, for example, one or more sensors, a context manager, a device state component, or additional components. In some implementations, each application can communicate with each device component using an API (e.g., a public API). In some implementations, the API used by each application is specific to that application.

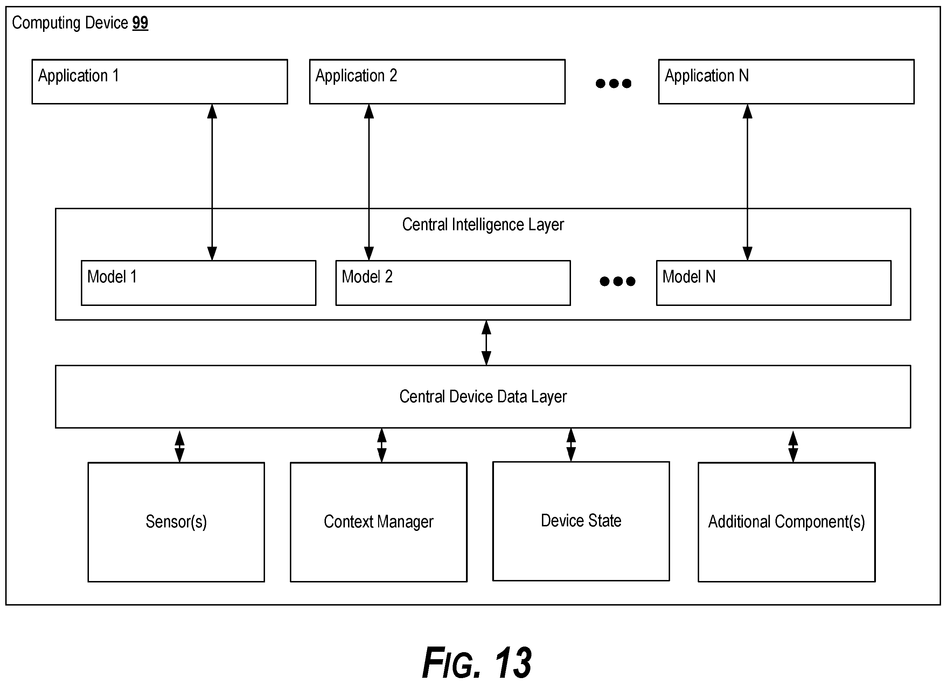

Figure 13 is a block diagram of an example computing device 99 that performs according to example embodiments of the present disclosure. Computing device 99 can be the same as or different from computing device 98. Computing device 99 can be a user computing device or a server computing device (e.g., computing device 50, server computing system(s) 60, etc.). Computing device 98 can implement model host 31. For instance, computing device 99 can include a number of applications (e.g., applications 1 through N). Each application can be in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer can include a number of machine-learned models. For example, as illustrated in Figure 13, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of computing device 99.

The central intelligence layer can communicate with a central device data layer. The central device data layer can be a centralized repository of data for computing device 99. As illustrated in Figure 13, the central device data layer can communicate with a number of other components of the computing device, such as, for example, one or more sensors, a context manager, a device state component, or additional components. In some implementations, the central device data layer can communicate with each device component using an API (e.g., a private API).

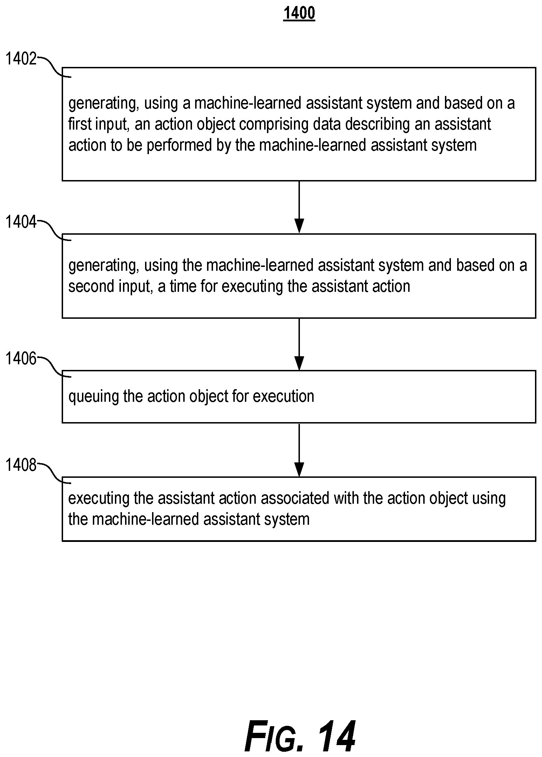

Figure 14 depicts a flowchart of a method 1400 for implementing a machine-learned assistant system according to aspects of the present disclosure.

One or more portion(s) of example method 1400 can be implemented by a computing system that includes one or more computing devices such as, for example, computing systems described with reference to the preceding figures. Each respective portion of example method 1400 can be performed by any (or any combination) of one or more computing devices. Moreover, one or more portion(s) of example method 1400 can be implemented on the hardware components of the device(s) described herein. Figure 14 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 14 is described with reference to elements/terms described with respect to other systems and figures for exemplary illustrated purposes and is not meant to be limiting. One or more portions of example method 1400 can be performed additionally, or alternatively, by other systems.

At 1402, example method 1400 includes generating, using a machine-learned assistant system and based on a first input, an action object comprising data describing an assistant action to be performed by the machine-learned assistant system. For instance, preprocessing system 202 can receive the first input and segment the raw input data into chunks (e.g., input chunks 204), which may be then analyzed by analysis system 206. During analysis, certain input chunks that are identified to contain directives or commands for actions may then be used to construct action objects 212. These action objects can encapsulate the necessary data and attributes 214 that describe the assistant action to be performed by the machine-learned assistant system.

At 1404, example method 1400 includes generating, using the machine-learned assistant system and based on a second input, a time for executing the assistant action, wherein the second input is based on at least a portion of a cache of available context data. For instance, action scheduling system 110 can perform inference of contextual information to predict a time to schedule an action. The second input can be an input to action scheduling system 110. The available context data can include context from stored context objects, contextual signals from device information (e.g., location, data from connected applications, such as a calendar, etc.).

At 1406, example method 1400 includes queuing the action object for execution. For instance, an action object 300 can be placed in action hold queue 302.

At 1406, example method 1400 includes executing the assistant action associated with the action object using the machine-learned assistant system. Action execution system 112 can leverage context data, which may include newly available or updated context data stored in context object storage 108, to perform the operations necessary to execute the action effectively. This system can interact with various components of the machine-learned assistant system 100 and external systems to complete tasks such as data transmission, processing requests, or managing device operations. For instance, actions can include controlling an operation of a device (e.g., engaging APIs of an operating system to send notifications, change device power state, etc.) or application (e.g., engaging APIs of an application to perform an operation within the application, such as creating and sending a message, creating a calendar event, etc.).

In some implementations of example method 1400, the assistant action is a predictive action that includes obtaining an inference from the machine-learned assistant system by executing one or more machine-learned models at an execution time of the action using context data available at the execution time. For instance, action execution system 112 can interact with machine-learned model system(s) 114 to execute models that process the context data stored in context object storage 108 or otherwise available on a device. Action execution system 112 can use any machine-learned model described herein (e.g., any configuration of machine-learned model(s) 1).

In some implementations of example method 1400, executing the assistant action using the machine-learned assistant system includes obtaining, based on a cache of newly available context data, a third input for input to the machine-learned assistant system. For instance, the third input can include a query to a model used by action scheduling system 110, such as a model used by action readiness predictor 304. In some implementations of example method 1400, executing the assistant action using the machine-learned assistant system includes obtaining, based on the third input, an indication of whether sufficient context is available to perform the action. For example, action readiness predictor 304 can generate such indication. In some implementations of example method 1400, executing the assistant action using the machine-learned assistant system includes, based on the indication, continuing execution of the assistant action. In some implementations of example method 1400, execution of the assistant action includes processing, using the machine-learned assistant system, an action query based on at least a portion of the cache of newly available context data to generate an inference that describes an operation for a computing device to execute to perform the assistant action. For instance, an action query can include an input to a machine-learned model executed at execution time to perform the action. The model can generate the inference. An example inference can describe an operation including a function call, API call, or other tool to invoke. An example inference can describe input parameters for the operation. In some implementations of example method 1400, execution of the assistant action includes initiating execution of the operation. For instance, the system can execute the function call in an execution environment or invoke the API or other tool using the input parameters.

In some implementations of example method 1400, executing the assistant action using the machine-learned assistant system includes obtaining, based on a cache of newly available context data, a third input for input to the machine-learned assistant system. In some implementations of example method 1400, executing the assistant action using the machine-learned assistant system includes obtaining, based on the third input, an indication of whether sufficient context is available to perform the action. In some implementations of example method 1400, executing the assistant action using the machine-learned assistant system includes based on the indication, deferring execution of the assistant action. For instance, deferring the action can include rescheduling for a later time. In some implementations of example method 1400, deferring execution of the assistant action includes processing, using the machine-learned assistant system, a deferred scheduling query based on at least a portion of the newly available context data to determine an execution time for executing the assistant action. The deferred scheduling query can include an input to a model used by action scheduling system 110 to predict a new scheduled time. In some implementations of example method 1400, deferring execution of the assistant action includes re-queuing the assistant action for execution. In some implementations of example method 1400, deferring execution of the assistant action includes executing the assistant action using the machine-learned assistant system (e.g., at the new deferred time).

In some implementations of example method 1400, executing the assistant action using the machine-learned assistant system includes obtaining, based on a cache of newly available context data, a third input for input to the machine-learned assistant system. In some implementations of example method 1400, executing the assistant action using the machine-learned assistant system includes obtaining, based on the third input, an indication of whether sufficient context is available to perform the action. In some implementations of example method 1400, executing the assistant action using the machine-learned assistant system includes based on the indication, generating a request for missing information.

For instance, upon receiving an indication that the available context data is insufficient, the system can process a missing information query using machine-learned model system(s) 114. This query identifies the specific information that is needed. In an example, the system can output a request for this missing information to a user interface system, which may prompt the user to provide the required data. In an example, the system can output a request for this missing information to another system (e.g., a search engine, another assistant system, etc.).

In some implementations of example method 1400, generating the request includes processing, using the machine-learned assistant system, a missing information query based on at least a portion of the newly available context data to identify information to obtain via the request. The query can be generated using a machine-learned model. The query can be a natural language query configured to request the information from a user or a natural language assistant interface. The query can be a programmatic query to search a database, instruct a search engine, etc. In some implementations of example method 1400, generating the request includes outputting, from the machine-learned assistant system and to a user interface system, the request for missing information. In some implementations of example method 1400, executing the assistant action using the machine-learned assistant system includes receiving, by the machine-learned assistant system and from the user interface system, additional context data. In some implementations of example method 1400, executing the assistant action using the machine-learned assistant system includes executing the assistant action using the machine-learned assistant system to process the additional context data.

In some implementations of example method 1400, executing the assistant action includes processing, using the machine-learned assistant system, an action query based on the additional context data to generate an inference that describes an operation for a computing device to execute to perform the assistant action. In some implementations of example method 1400, executing the assistant action includes initiating execution of the operation.

In some implementations of example method 1400, the inference includes a textual description of an input to an application programming interface (API), and wherein the operation includes executing a call to the API using the input.

In some implementations of example method 1400, processing the first input to predict the assistant action includes generating, using the machine-learned assistant system and based on the first input, one or more output predictions respectively associated with one or more output values. In some implementations of example method 1400, processing the first input to predict the assistant action includes determining, based on the one or more output values, the assistant action. For example, a machine-learned model can be used to infer an action to perform based on a user's plain-language instruction.

In some implementations of example method 1400, the one or more output values correspond to one or more textual chunks that indicate the assistant action.

In some implementations of example method 1400, an execution time of the assistant action is an updated time obtained using the machine-learned assistant system to process an updated scheduling query based on at least a portion of an updated cache of available context data to determine the updated time for executing the assistant action. For instance, action scheduling system 110 can process an updated scheduling query by inputting an input to a machine-learned model to predict a new time for execution of an action. Action scheduling system 110 can process an updated scheduling query by inputting an input to a machine-learned model to confirm an existing time for execution of an action.

In some implementations, example method 1400 includes periodically, for each respective queued action of one or more queued actions in the queue, processing, using the machine-learned assistant system, a respective scheduling query based on at least a portion of a cache of available context data to determine a respective updated time for executing the respective queued action.

In some implementations, example method 1400 includes receiving the first input, wherein the first input includes unstructured input data. In some implementations, example method 1400 includes inputting the unstructured input data to a machine-learned preprocessing model to generate one or more input chunks. In some implementations, example method 1400 includes for each respective input chunk of the one or more input chunks constructing a respective context object for the respective input chunk, wherein the respective context object includes a plurality of attributes. In some implementations of example method 1400, the plurality of attributes comprise content from the respective input chunk. In some implementations of example method 1400, the plurality of attributes comprise one or more attributes characterizing features of the respective input chunk. In some implementations, example method 1400 includes for each respective input chunk of the one or more input chunks constructing a respective action object for the respective input chunk, wherein the respective action object includes one or more attributes describing an action to be performed by the machine-learned assistant system. In some implementations, at least one respective action object is the action object.

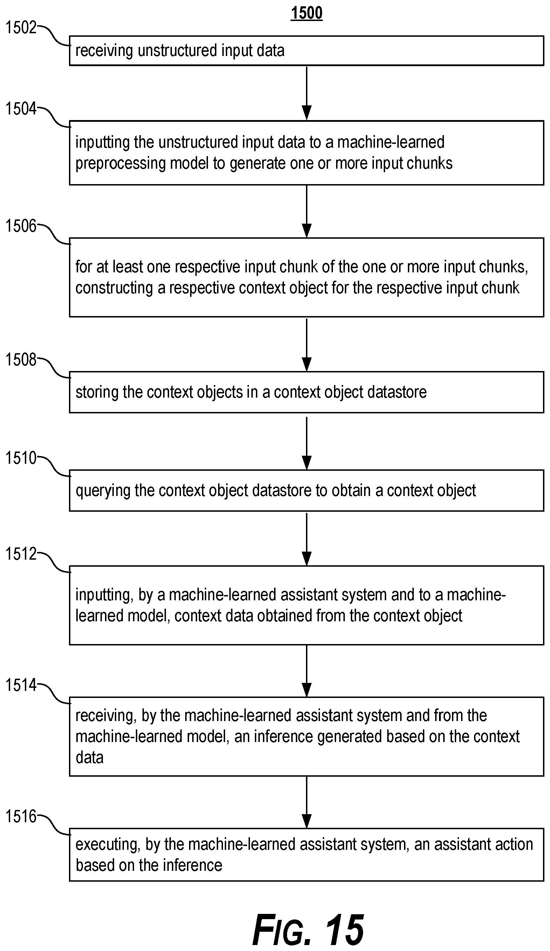

Figure 15 depicts a flowchart of a method 1500 for implementing a machine-learned assistant system according to aspects of the present disclosure.

One or more portion(s) of example method 1500 can be implemented by a computing system that includes one or more computing devices such as, for example, computing systems described with reference to the preceding figures. Each respective portion of example method 1500 can be performed by any (or any combination) of one or more computing devices. Moreover, one or more portion(s) of example method 1500 can be implemented on the hardware components of the device(s) described herein. Figure 15 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 15 is described with reference to elements/terms described with respect to other systems and figures for exemplary illustrated purposes and is not meant to be limiting. One or more portions of example method 1500 can be performed additionally, or alternatively, by other systems.

At 1502, example method 1500 includes receiving unstructured input data. For example, the system can receive unstructured input data from a variety of sources, such as natural language text from a user's voice command ("Remind me to buy groceries tomorrow and send a message to John about the meeting"), transcribed audio data from a recorded conversation, or image data containing text or objects that require processing (e.g., a photo of a shopping list). This unstructured input can also originate from sensor readings, email content, calendar entries, or other digital communications.

At 1504, example method 1500 includes inputting the unstructured input data to a machine-learned preprocessing model to generate one or more input chunks. For example, the machine-learned preprocessing model can process the unstructured input data to generate one or more input chunks. For example, a transcription of a user's voice command, "Remind me to buy groceries tomorrow and send a message to John about the meeting," can be input to a natural language processing model that segments the utterance into distinct semantic chunks. This model can identify "Remind me to buy groceries tomorrow" as a first input chunk related to a reminder task, and "send a message to John about the meeting" as a second input chunk related to a communication task. Similarly, an image of a handwritten shopping list can be processed to extract individual items, with each item such as "milk," "eggs," and "bread" forming a distinct input chunk or being composed into a "list" chunk.

At 1506, example method 1500 includes, for at least one respective input chunk of the one or more input chunks, constructing a respective context object for the respective input chunk, wherein the respective context object includes a plurality of attributes. In some implementations of example method 1400 or example method 1500, the plurality of attributes comprise content from the respective input chunk. In some implementations of example method 1400 or example method 1500, the plurality of attributes comprise one or more attributes characterizing features of the respective input chunk.

For example, for each respective input chunk, a respective context object can be constructed. For instance, for the first input chunk, "Remind me to buy groceries tomorrow," a context object can be generated with a content attribute storing this text. Additional attributes can characterize features, such as a "task_type" attribute set to "reminder," a "due_date" attribute inferred as "tomorrow", and a "priority" attribute predicted as "medium." Similarly, for the second input chunk, "send a message to John about the meeting," another context object can be constructed with its content attribute storing this text, a "task_type" attribute set to "communication", a "recipient" attribute identified as "John", and a "subject" attribute inferred as "meeting". Each context object, therefore, encapsulates both the original content and a plurality of metadata attributes that enrich its semantic representation.

At 1508, example method 1500 includes storing the context objects in a context object datastore.

At 1510, example method 1500 includes querying the context object datastore to obtain a context object, wherein the query operates over at least one of the attributes of the plurality of attributes of the context object. For example, the querying can involve retrieving context objects based on their "task_type" attribute to identify all "reminder" tasks scheduled for a specific day, such as "tomorrow." Alternatively, a query can operate on the "priority" attribute to fetch all "high-priority" context objects, ensuring that time-sensitive information or actions are identified promptly. Further, a query can search for context objects linked by a "related_entities" attribute to a particular person, such as "John," to gather all relevant information before sending a message to the person. This process allows the system to efficiently access and leverage structured contextual information, enabling more accurate and relevant responses or actions.

At 1512, example method 1500 includes inputting, by a machine-learned assistant system and to a machine-learned model, context data obtained from the context object. For example, the machine-learned assistant system can obtain context data from a retrieved context object and input this data to a machine-learned model. Consider a scenario where a user, having previously stated a preference to "eat more healthily," then asks, "What shall I have for breakfast?" The system can retrieve a context object containing the "eat more healthily" preference, identified by its conditioning context tag. Content from this context object can be input to a machine-learned model to condition the model response by providing relevant background information, helping the model to generate a breakfast suggestion that aligns with the user's established dietary goal.

At 1514, example method 1500 includes receiving, by the machine-learned assistant system and from the machine-learned model, an inference generated based on the context data.

At 1516, example method 1500 includes executing, by the machine-learned assistant system, an assistant action based on the inference.

In some implementations of example method 1400 or example method 1500, the one or more attributes characterizing features of the respective input chunk comprise an input source attribute storing at least a portion of the unstructured input data. For instance, a context object can store a segment of or all of an original input to the system. In some implementations of example method 1400 or example method 1500, the one or more attributes characterizing features of the respective input chunk comprise an input source attribute storing a description of at least the portion of the unstructured input data, wherein the description was generated by the machine-learned assistant system by processing at least the portion of the unstructured input data using a machine-learned description generation model. For instance, a context object can store a summary of or other generated description of the original input (e.g., an output generated by querying a language processing model to summarize the relevant context to a particular segment).

In some implementations of example method 1400 or example method 1500, the one or more attributes characterizing features of the respective input chunk comprise a tag attribute corresponding to one of a plurality of context classes, wherein the tag attribute is predicted by a machine-learned context classification model. In some implementations of example method 1400 or example method 1500, the query operates over the tag attribute for the context object. Example tags include "conditioning," "recall," "instruction," etc.

In some implementations, example method 1400 or example method 1500 includes receiving unstructured input data. In some implementations, example method 1400 or example method 1500 includes inputting the unstructured input data to a machine-learned preprocessing model to generate one or more input chunks. In some implementations, example method 1400 or example method 1500 includes for at least one respective input chunk of the one or more input chunks constructing a respective action object for the respective input chunk, wherein the respective action object includes one or more attributes describing a respective action to be performed by a machine-learned assistant system. In some implementations, example method 1400 or example method 1500 includes submitting the action object for execution. In some implementations, example method 1400 or example method 1500 includes executing, by the machine-learned assistant system, an assistant action based on the inference.

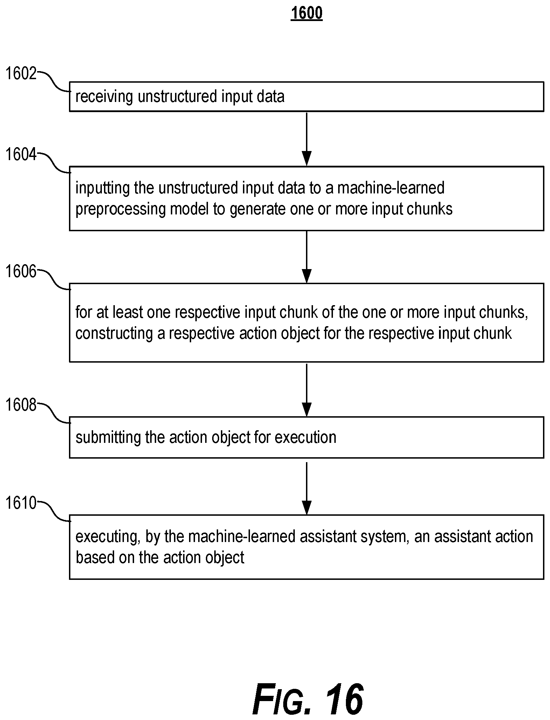

Figure 16 depicts a flowchart of a method 1600 for implementing a machine-learned assistant system according to aspects of the present disclosure.

One or more portion(s) of example method 1600 can be implemented by a computing system that includes one or more computing devices such as, for example, computing systems described with reference to the preceding figures. Each respective portion of example method 1600 can be performed by any (or any combination) of one or more computing devices. Moreover, one or more portion(s) of example method 1600 can be implemented on the hardware components of the device(s) described herein. Figure 16 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 16 is described with reference to elements/terms described with respect to other systems and figures for exemplary illustrated purposes and is not meant to be limiting. One or more portions of example method 1600 can be performed additionally, or alternatively, by other systems.

At 1602, example method 1600 includes receiving unstructured input data.

At 1604, example method 1600 includes inputting the unstructured input data to a machine-learned preprocessing model to generate one or more input chunks.

At 1604, example method 1600 include, for at least one respective input chunk of the one or more input chunks, constructing a respective action object for the respective input chunk, wherein the respective action object includes one or more attributes describing a respective action to be performed by a machine-learned assistant system.

At 1604, example method 1600 includes submitting the action object for execution.

At 1604, example method 1600 includes executing, by the machine-learned assistant system, an assistant action based on the inference.

In some implementations of example method 1400, example method 1500, or example method 1600, the one or more attributes comprise a temporal attribute storing data indicating a time to execute the respective action. In some implementations of example method 1400, example method 1500, or example method 1600, the one or more attributes comprise one or more prerequisite actions. In some implementations of example method 1400, example method 1500, or example method 1600, the one or more attributes comprise one or more associated context objects to be used in executing the action.

In some implementations of example method 1400, example method 1500, or example method 1600, a context object is classified as containing conditioning material or is classified as containing recall material.

In some implementations of example method 1400, example method 1500, or example method 1600, context objects classified as containing conditioning material are retrieved by the machine-learned assistant system to condition inference by one or more machine-learned models invoked by the machine-learned assistant system.

In some implementations of example method 1400, example method 1500, or example method 1600, context objects classified as containing recall material are retrieved by the machine-learned assistant system to perform a recall task.

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

The present technology may also comprise a computer program product comprising instructions that are executable by one or more processors to cause a computing system to perform operations according to the disclosed method embodiments.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

Aspects of the disclosure have been described in terms of illustrative embodiments thereof. Any and all features in the following claims can be combined or rearranged in any way possible, including combinations of claims not explicitly enumerated in combination together, as the example claim dependencies listed herein should not be read as limiting the scope of possible combinations of features disclosed herein. Accordingly, the scope of the present disclosure is by way of example rather than by way of limitation, and the subject disclosure does not preclude inclusion of such modifications, variations or additions to the present subject matter as would be readily apparent to one of ordinary skill in the art. Moreover, terms are described herein using lists of example elements joined by conjunctions such as "and," "or," "but," etc. It should be understood that such conjunctions are provided for explanatory purposes only. Clauses and other sequences of items joined by a particular conjunction such as "or," for example, can refer to "and/or," "at least one of", "any combination of" example elements listed therein, etc. Terms such as "based on" should be understood as "based at least in part on."

The term "can" should be understood as referring to a possibility of a feature in various implementations and not as prescribing an ability that is necessarily present in every implementation. For example, the phrase "X can perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

The term "may" should be understood as referring to a possibility of a feature in various implementations and not as prescribing an ability that is necessarily present in every implementation. For example, the phrase "X may perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

The proposed method may comprise one of more of the following clauses:
Clause 1. A computer-implemented method, comprising:
   receiving unstructure0d input data;
   inputting the unstructured input data to a machine-learned preprocessing model to generate one or more input chunks;
   for at least one respective input chunk of the one or more input chunks:
      constructing a respective context object for the respective input chunk, wherein the respective context object comprises a plurality of attributes,
      wherein the plurality of attributes comprise:
         content from the respective input chunk; and
         one or more attributes characterizing features of the respective input chunk;
   storing the context objects in a context object datastore;
   querying the context object datastore to obtain a context object, wherein the query operates over at least one of the attributes of the plurality of attributes of the context object;
   inputting, by a machine-learned assistant system and to a machine-learned model, context data obtained from the context object;
   receiving, by the machine-learned assistant system and from the machine-learned model, an inference generated based on the context data; and
   executing, by the machine-learned assistant system, an assistant action based on the inference.
Clause 2. The computer-implemented method of clause 1, wherein the one or more attributes characterizing features of the respective input chunk comprise:
   an input source attribute storing:
   at least a portion of the unstructured input data; or
   a description of at least the portion of the unstructured input data, wherein the description was generated by the machine-learned assistant system by processing at least the portion of the unstructured input data using a machine-learned description generation model.
Clause 3. The computer-implemented method of any of clauses 1 or 2, wherein the one or more attributes characterizing features of the respective input chunk comprise:
   a tag attribute corresponding to one of a plurality of context classes, wherein the tag attribute is predicted by a machine-learned context classification model;
   wherein the query operates over the tag attribute for the context object.
Clause 4 The computer-implemented method of any of the preceding clauses, comprising:
   receiving unstructured input data;
   inputting the unstructured input data to a machine-learned preprocessing model to generate one or more input chunks;
   for at least one respective input chunk of the one or more input chunks:
      constructing a respective action object for the respective input chunk, wherein the respective action object comprises one or more attributes describing a respective action to be performed by a machine-learned assistant system;
   submitting the action object for execution; and
   executing, by the machine-learned assistant system, an assistant action based on the inference.
Clause 5 A computer-implemented method, comprising:
   receiving unstructured input data;
   inputting the unstructured input data to a machine-learned preprocessing model to generate one or more input chunks;
   for at least one respective input chunk of the one or more input chunks:
      constructing a respective action object for the respective input chunk, wherein the respective action object comprises one or more attributes describing a respective action to be performed by a machine-learned assistant system;
   submitting the action object for execution; and
   executing, by the machine-learned assistant system, an assistant action based on the action object.
Clause 6 The computer-implemented method of clause 5, wherein the one or more attributes comprise:
   a temporal attribute storing data indicating a time to execute the respective action; one or more prerequisite actions; or
   one or more associated context objects to be used in executing the action.
Clause 7 The computer-implemented method of any of the preceding clauses 5 or 6, wherein a context object is classified as containing conditioning material or is classified as containing recall material.
Clause 8 The computer-implemented method of clause 7, wherein context objects classified as containing conditioning material are retrieved by the machine-learned assistant system to condition inference by one or more machine-learned models invoked by the machine-learned assistant system.
Clause 9 The computer-implemented method of clauses 7 or 8, wherein context objects classified as containing recall material are retrieved by the machine-learned assistant system to perform a recall task.

## Claims

**1.** A computer-implemented method for scheduling execution of machine-learned assistant systems to perform actions, the method comprising:
generating, using a machine-learned assistant system and based on a first input, an action object comprising data describing an assistant action to be performed by the machine-learned assistant system;
generating, using the machine-learned assistant system and based on a second input, a time for executing the assistant action, wherein the second input is based on at least a portion of a cache of available context data;
queuing the action object for execution; and
executing the assistant action associated with the action object using the machine-learned assistant system.

**2.** The computer-implemented method of claim 1, wherein the assistant action is a predictive action that comprises obtaining an inference from the machine-learned assistant system by executing one or more machine-learned models at an execution time of the action using context data available at the execution time.

**3.** The computer-implemented method of any of the preceding claims, wherein executing the assistant action using the machine-learned assistant system comprises:
obtaining, based on a cache of newly available context data, a third input for input to the machine-learned assistant system;
obtaining, based on the third input, an indication of whether sufficient context is available to perform the action; and
based on the indication, continuing execution of the assistant action, wherein execution of the assistant action comprises:
processing, using the machine-learned assistant system, an action query based on at least a portion of the cache of newly available context data to generate an inference that describes an operation for a computing device to execute to perform the assistant action; and
initiating execution of the operation.

**4.** The computer-implemented method of any of claims 1 or 2, wherein executing the assistant action using the machine-learned assistant system comprises:
obtaining, based on a cache of newly available context data, a third input for input to the machine-learned assistant system;
obtaining, based on the third input, an indication of whether sufficient context is available to perform the action; and
based on the indication, deferring execution of the assistant action, wherein deferring execution of the assistant action comprises:
processing, using the machine-learned assistant system, a deferred scheduling query based on at least a portion of the newly available context data to determine an execution time for executing the assistant action;
re-queuing the assistant action for execution; and
executing the assistant action using the machine-learned assistant system.

**5.** The computer-implemented method of any of claims 1 or 2, wherein executing the assistant action using the machine-learned assistant system comprises:
obtaining, based on a cache of newly available context data, a third input for input to the machine-learned assistant system;
obtaining, based on the third input, an indication of whether sufficient context is available to perform the action; and
based on the indication, generating a request for missing information, wherein generating the request comprises:
processing, using the machine-learned assistant system, a missing information query based on at least a portion of the newly available context data to identify information to obtain via the request; and
outputting, from the machine-learned assistant system and to a user interface system, the request for missing information;
receiving, by the machine-learned assistant system and from the user interface system, additional context data; and
executing the assistant action using the machine-learned assistant system to process the additional context data.

**6.** The computer-implemented method of claim 5, wherein executing the assistant action comprises:
processing, using the machine-learned assistant system, an action query based on the additional context data to generate an inference that describes an operation for a computing device to execute to perform the assistant action; and
initiating execution of the operation.

**7.** The computer-implemented method of claim 6, wherein the inference comprises a textual description of an input to an application programming interface (API), and wherein the operation comprises executing a call to the API using the input.

**8.** The computer-implemented method of any of the preceding claims, wherein processing the first input to predict the assistant action comprises:
generating, using the machine-learned assistant system and based on the first input, one or more output predictions respectively associated with one or more output values; and
determining, based on the one or more output values, the assistant action.

**9.** The computer-implemented method of claim 8, wherein the one or more output values correspond to one or more textual chunks that indicate the assistant action.

**10.** The computer-implemented method of any of the preceding claims, wherein an execution time of the assistant action is an updated time obtained using the machine-learned assistant system to process an updated scheduling query based on at least a portion of an updated cache of available context data to determine the updated time for executing the assistant action.

**11.** The computer-implemented method of claim 10, comprising:
periodically, for each respective queued action of one or more queued actions in the queue:
processing, using the machine-learned assistant system, a respective scheduling query based on at least a portion of a cache of available context data to determine a respective updated time for executing the respective queued action.

**12.** The computer-implemented method of any of the preceding claims, comprising:
receiving the first input, wherein the first input comprises unstructured input data;
inputting the unstructured input data to a machine-learned preprocessing model to generate one or more input chunks;
for each respective input chunk of the one or more input chunks:
constructing a respective context object for the respective input chunk, wherein the respective context object comprises a plurality of attributes, wherein the plurality of attributes comprise:
content from the respective input chunk; and
one or more attributes characterizing features of the respective input chunk; or
constructing a respective action object for the respective input chunk, wherein the respective action object comprises one or more attributes describing an action to be performed by the machine-learned assistant system;
wherein at least one respective action object is the action object.

**14.** One or more non-transitory computer-readable media storing instructions that are executable by one or more processors to cause a computing system to perform operations, the operations comprising the method of any of the preceding claims.

**15.** A computing system, comprising:
one or more processors; and
one or more non-transitory computer-readable media storing instructions that are executable by the one or more processors to cause the computing system to perform operations, the operations comprising the method of any of the preceding claims 1 to 13.
